# EUROPÄISCHE PATENTANMELDUNG

(11) **EP 4 831 623 A1**
(43) Veröffentlichungstag der Anmeldung: **28.10.2026**
(21) Anmeldenummer: 26165549.2
(22) Anmeldetag: 17.03.2026
(51) Int. Cl.: G01N 21/952, G01N 21/88, G01N 21/90

(54) **PRÜFVORRICHTUNG SOWIE PRÜFSYSTEM**

(30) Priorität: 25.04.2025 DE 102025115988
(71) Anmelder: Visicontrol Gesellschaft für elektronische Bildverarbeitung mbH, 88250 Weingarten (DE)
(72) Erfinder: Haag, Winfried, 88212 Ravensburg (DE); Pflug, Manfred, 88212 Ravensburg (DE)
(74) Vertreter: Strauss, Steffen

(57) **Zusammenfassung**

Die vorliegende Erfindung betrifft eine Prüfvorrichtung zur mantelseitigen Inspektion von Rotationskörpern, wobei der jeweilige Rotationskörper eine Rotationsachse umfasst, die senkrecht zu einer Tragfläche und konzentrisch zu einer Mantelfläche des jeweiligen Rotationskörpers verläuft, aufweisend Fördermittel, die so ausgebildet sind, dass die Rotationskörper in einem Transportzustand entlang eines Förderwegs nacheinander bewegbar sind und Erfassungsmittel, die so ausgebildet sind, dass die Mantelfläche des jeweiligen Rotationskörpers in einem Erfassungsbereich durch wenigstens ein Bildsignal erfassbar ist. Erfindungsgemäß ist vorgesehen, dass die Fördermittel eine Antriebsschiene und eine Bremsschiene umfassen, die gemeinsam einen Auflagebereich für die Rotationskörper ausbilden und entlang des Förderwegs gleisartig und/oder parallel so ausgerichtet sind, dass die Rotationsköper im Transportzustand durch Reibung einerseits zwischen der Antriebsschiene und einem ersten Teilbereich der jeweiligen Tragfläche mit einer Antriebskraft und andererseits zwischen der Bremsschiene und einem zweiten Teilbereich der jeweiligen Tragfläche mit einer Bremskraft sowohl translatorisch entlang des Förderwegs als auch rotatorisch um die jeweilige Rotationsachse bewegbar sind, wobei sich der Erfassungsbereich entlang eines Abschnitts des Förderwegs erstreckt.

## Beschreibung

Die vorliegende Erfindung betrifft eine Prüfvorrichtung gemäß dem Oberbegriff von Anspruch 1. Ferner betrifft die vorliegende Erfindung ein Prüfsystem nach Anspruch 13.

Aus dem Stand der Technik sind Prüfvorrichtungen zur Inspektion von Mantelflächen von Rotationskörpern allgemein bekannt. Die bekannten Prüfvorrichtungen umfassen Fördermittel in Form eines Drehtellers. Der Drehteller umfasst einen quer zu seiner Drehachse ausgerichteten Auflagebereich zur Aufnahme des Rotationskörpers. Durch Rotieren des Drehtellers um seine Drehachse kann die Mantelfläche des Rotationskörpers von Erfassungsmitteln, beispielsweise einer Kamera, durch mehrere, sich randseitig überlappende Bildaufnahmen vollständig und/oder lückenlos erfasst werden.

Wesentlich ist hierbei, dass die Drehachse des Drehtellers konzentrisch zur Mantelfläche verläuft, um eine Seitwärtsbewegung des Rotationskörpers während der Volldrehung zu vermeiden, da sich dies auf die Bildaufnahmen negativ auswirken würde. Die exakte Positionierung der Rotationskörper auf dem Drehteller und somit die Abweichung zwischen der Drehachse des Drehtellers und der Rotationsachse des Rotationskörpers entscheidet somit über die Qualität der Bildaufnahmen. Nur bei einer geringen Abweichung lassen sich in der Bildaufnahme auch kleinste Störstellen erkennen.

Die Inspektion mehrerer Rotationskörper mit solchen Drehtellern, beispielsweise im Rahmen einer Qualitätsprüfung von Erzeugnissen einer Fertigungsanlage, gestaltet sich aufgrund der manuellen Positionierung der Rotationskörper auf dem Drehteller, dem sogenannten Platzieren, und der stufenweisen Prüfung als aufwendig. Zum Platzieren der Rotationskörper können zwar automatisierte Greifvorrichtungen genutzt werden, jedoch sind solche Systeme technisch komplex und somit teuer. Weiterhin entstehen Folgekosten zur Anpassung der Greifvorrichtung an unterschiedliche Teilegeometrien der Rotationskörper. Zusätzlich entstehen unerwünschte hohe Umrüstzeiten.

Um eine Vielzahl von Rotationskörpern mantelseitig zu inspizieren sind ferner auch Prüfvorrichtungen mit Fördermitteln in Form eines Rundtakters bekannt. Ein Rundtakter umfasst eine Kreisscheibe, die horizontal ausgerichtet ist und in einem äußeren Ringabschnitt mehrere Auflagebereiche zum Aufnehmen der Rotationskörper umfasst. Die Auflagebereiche sind entlang des Umfangs voneinander gleichmäßig beabstandet angeordnet. Durch eine stufenweise Drehbewegung der Kreisscheibe werden die Rotationsköper der Reihe nach in einen Erfassungsbereich von Erfassungsmitteln geführt. Im Erfassungsbereich werden die Rundkörper mittels einer Spannzange mantelseitig gegriffen und um 360° rotiert, um mit den Erfassungsmitteln ein Bildsignal von der Mantelfläche der Rotationskörper zu erzeugen. Nachteilig ist hierbei, dass die Mantelfläche durch die Spannzange bereichsweise verdeckt wird. Dies kann zwar durch einen zweigeteilten Erfassungsvorgang mit einem Umgreifen der Spannzange verhindert werden, jedoch erhöht sich hierbei die Dauer für die Inspektion der vollständigen Mantelfläche, weshalb die Teileleistung des Rundtakters reduziert wird.

Zusammenfassend weisen die aus dem Stand der Technik bekannten Prüfvorrichtungen zumindest einen der folgenden Nachteile auf:
Nachteil 1: Im Zusammenhang der einen Drehteller umfassenden Prüfvorrichtung wurde bereits darauf hingewiesen, dass das schrittweise Platzieren der Rotationskörper auf dem Drehteller mit automatisierter Greifvorrichtung aufgrund des komplexen Teilehandlings sowie weitere Rüstsätze für neue Varianten der Rotationskörper teuer ist. Zusätzlich entstehen hier unerwünschte hohe Umrüstzeiten.
Nachteil 2: Bei bekannten Prüfvorrichtungen zur dynamischen Mantelkontrolle ist das gesamte Prüfsystem auf eine bestimmte Teile-Geometrie oder eine Teile-Familie der Rotationskörper zugeschnitten. Neben dieser festgelegten Rotationskörper-Geometrie können bekannte Prüfvorrichtungen entweder aufgrund fehlender Platzverhältnisse gar nicht oder nur nach einer aufwendigen Umrüstung, insbesondere hinsichtlich der Fördermittel und/oder einer konkreten Ausgestaltung der Greifvorrichtung betreffend, umgerüstet werden. Bekannte Prüfvorrichtungen haben somit den Nachteil einer fehlenden Flexibilität in Bezug auf die Teile -Geometrie unterschiedlicher Rotationskörper und daraus resultierend nur einer geringen Universalität.
Nachteil 3: Bekannte Prüfvorrichtungen erlauben, wie bereits in Bezug auf einen Rundtackter erläutert, nur eine eingeschränkte Sicht auf die Mantelfläche der Rotationskörper im Erfassungsbereich, da die Mantelfläche auch als Krafteintragsfläche für Greif- oder Antriebsmittel zum Erzielen der 360°-Drehung dient. Um die Mantelfläche vollständig zu erfassen, wird eine zweistufige Erfassung mit einem Zwischenschritt zum Umgreifen erforderlich. Eine eingeschränkte Sicht auf die Mantelfläche des jeweiligen Rotationskörpers im Erfassungsbereich ist somit bei bekannten Prüfvorrichtungen von Nachteil.
Nachteil 4: Bekannte Prüfvorrichtungen bieten, insbesondere aufgrund der konstruktiven Ausgestaltung der Fördermittel, nur einen begrenzten freien Bauraum, der zur Aufnahme von Auflicht- und Durchlicht-Beleuchtungsmitteln genutzt werden kann. Dies hat beispielsweise zur Folge, dass die Auflicht-Beleuchtungsmittel vom jeweiligen Rotationskörper im Erfassungsbereich nur beabstandet und nicht hierzu unmittelbar benachbart positioniert werden können. Ein bleibender Mindestabstand bei einer Dunkelfeld-Beleuchtung und/oder eine nicht optimale Beleuchtung der Mantelfläche wirken sich jedoch negativ auf das Prüfergebnis aus.
Nachteil 5: Das Platzieren einzelner Rotationskörper im Erfassungsbereich ist zeitaufwendig, was prozessbedingt eine unerwünscht geringe Teileleistung bei diesen aus dem Stand der Technik bekannten Prüfvorrichtungen zur Folge hat.

Folglich liegt der vorliegenden Erfindung die Aufgabe zugrunde, die aus dem Stand der Technik bekannten Nachteile zu überwinden. Bevorzugt ist es die Aufgabe der vorliegenden Erfindung, eine Prüfvorrichtung sowie ein Prüfsystem für Rotationskörper anzugeben, die eine separate Platzierung einzelner Rotationskörper im Erfassungsbereich vollständig vermeidet und/oder eine hohe Teilevielfalt hinsichtlich der geometrischen Ausgestaltung der Rotationskörper bei gleichzeitig geringen Umrüstzeiten erlaubt und/oder eine uneingeschränkte Sicht auf die Mantelfläche erlaubt und/oder einen freien Bauraum zur Aufnahme von Beleuchtungsmitteln in unmittelbarer Nähe der Rotationskörper anbietet und/oder eine hohe Teileleistung der Rotationskörper und somit eine hohe Sortierleistung ermöglicht.

Besonders bevorzugt ist die Aufgabe der vorliegenden Erfindung, eine Prüfvorrichtung für Rotationskörper anzugeben, die bei einer hohen Teileleistung und ohne weitere Maßnahme zur Platzierung einzelner Rotationskörper im Erfassungsbereich eine vollständige Inspektion der Mantelfläche von Rotationskörpern ermöglicht, um bereits geringfügige Störstellen in den Mantelflächen der Rotationskörper zu erkennen.

Diese Aufgabe wird durch eine erfindungsgemäße Prüfvorrichtung gemäß Anspruch 1 gelöst. Ferner wird die Aufgabe durch ein erfindungsgemäßes Prüfsystem nach Anspruch 13 gelöst.

Die erfindungsgemäße Prüfvorrichtung ist zur mantelseitigen Inspektion von Rotationskörpern eingerichtet.

Ein solcher Rotationskörper umfasst eine Rotationsachse, die senkrecht zu einer Tragfläche des Rotationskörpers und konzentrisch zu einer Mantelfläche des Rotationskörpers verläuft. Die Tragfläche der zu inspizierenden Rotationskörper ist entweder durch eine Bodenfläche des jeweiligen Rotationskörpers oder durch eine Bundfläche des jeweiligen Rotationskörpers ausgebildet.

Die erfindungsgemäße Prüfvorrichtung ist somit eingerichtet, um die Mantelfläche dieser Rotationskörper zu inspizieren.

Die erfindungsgemäße Prüfvorrichtung umfasst Fördermittel, die so ausgebildet sind, dass die Rotationskörper in einem Transportzustand entlang eines Förderwegs nacheinander bewegbar sind sowie Erfassungsmittel, die so ausgebildet sind, dass die Mantelfläche des jeweiligen Rotationskörpers in einem Erfassungsbereich durch wenigstens ein Bildsignal erfassbar ist.

Erfindungsgemäß ist es nun vorgesehen, dass die Fördermittel eine Antriebsschiene und eine Bremsschiene umfassen, die gemeinsam einen Auflagebereich für die Rotationskörper ausbilden. Die Antriebsschiene und die Bremsschiene sind entlang des Förderwegs der Prüfvorrichtung gleisartig und/oder parallel ausgerichtet, derart, dass die Rotationsköper in dem Transportzustand durch Reibung einerseits zwischen der Antriebsschiene und einem ersten Teilbereich der jeweiligen Tragfläche der Rotationskörper mit einer Antriebskraft und andererseits zwischen der Bremsschiene und einem zweiten Teilbereich der jeweiligen Tragfläche der Rotationskörper mit einer Bremskraft sowohl translatorisch entlang des Förderwegs als auch rotatorisch um die jeweilige Rotationsachse bewegbar sind.

Ferner ist die erfindungsgemäße Prüfvorrichtung so ausgebildet, dass sich der Erfassungsbereich, in dem die Mantelfläche in Bezug auf den Umfang vollständig inspiziert wird, entlang eines Abschnitts des Förderwegs und/oder abschnittsweise entlang des Förderwegs erstreckt.

Erfindungsgemäß vorteilhaft erfolgt somit die Erfassung und/oder Inspektion der jeweiligen Mantelfläche der Rotationskörper kontinuierlich und nicht etwa stufenweise, wie es aus dem Stand der Technik bekannt ist. Es kommt somit nicht zu einer Unterbrechung bei der Förderung der Rotationskörper entlang des Förderwegs, weshalb sich die Teileleistung im Vergleich zu den aus dem Stand der Technik bekannten Prüfvorrichtung deutlich erhöhen lässt.

Die Rotationskörper stehen im Transportzustand im ersten Teilbereich der jeweiligen Tragfläche und im zweiten Teilbereich der jeweiligen Tragfläche mit den Fördermitteln mechanisch in Kontakt. Konkret sitzt die jeweilige Tragfläche der Rotationskörper im ersten Teilbereich auf der Antriebsschiene und im zweiten Teilbereich auf der Bremsschiene auf. Die Rotationsachse des jeweiligen Rotationskörpers verläuft im Transportzustand senkrecht zum Förderweg und/oder senkrecht zum Auflagebereich, der von der Antriebs- und Bremsschiene ausgebildet wird.

Die Antriebsschiene, die insbesondere durch einen Bandantrieb ausgebildet ist, ist entlang des Förderwegs und/oder entlang der Förderrichtung bewegbar ausgebildet. Per Reibung wird die Tragfläche des Rotationskörpers im ersten Teilbereich mit der von der Antriebsschiene erzeugten Antriebskraft beaufschlagt. Die Antriebskraft erzeugt im jeweiligen Rotationskörper ein Drehmoment, das die Rotation des jeweiligen Rotationskörpers um seine Rotationsachse zur Folge hat. Neben der Rotationsbewegung wird durch die im ersten Teilbereich einwirkende Antriebskraft zusätzlich eine translatorische Bewegung der Rotationskörper entlang des Förderwegs und/oder entlang der parallelen Antriebs- und Bremsschiene und/oder entlang der Förderrichtung erzeugt.

Die entlang des Förderwegs bewegbare Antriebsschiene bewegt sich in einem Betriebszustand insbesondere mit einer konstanten Geschwindigkeit V1. Die sich im Transportzustand entlang des Förderwegs translatorisch bewegenden Rotationskörper mit der Geschwindigkeit Vtrans, wobei die Geschwindigkeit der Rotationskörper kleiner ist als die Geschwindigkeit der Antriebsschiene. Zwischen der Antriebsschiene und den Rotationskörpern besteht somit stets eine Relativbewegung ungleich null.

Die Bremsschiene ist gemäß einer bevorzugten Ausführungsvariante starr ausgebildet und steht im Transportzustand mit der jeweiligen Tragfläche der Rotationskörper im zweiten Teilbereich in Kontakt. Über die bevorzugt starr ausgebildete Bremsschiene werden die Rotationskörper mit einer Bremskraft beaufschlagt. Die Bremskraft fällt betragsmäßig kleiner aus als die Antriebskraft.

Alternativ ist es bevorzugt vorgesehen, dass die Bremsschiene durch eine zweite Antriebsschiene, besonders bevorzugt durch einen zweiten Bandantrieb ausgebildet ist. Die zweite Antriebsschiene ist entlang des Förderwegs bewegbar ausgebildet, derart, dass per Reibung die Tragfläche des Rotationskörpers im zweiten Teilbereich mit einer zweiten Antriebskraft beaufschlagt wird. Die zweite Antriebskraft ist betragsmäßig kleiner als die Antriebskraft der eigentlichen (ersten) Antriebsschiene. Durch die eigentliche (erste) Antriebsschiene und die zweite Antriebsschiene wird somit erzielt, dass im jeweiligen Rotationskörper ein Krafteintrag erzeugt wird, der neben der Rotationsbewegung um die jeweilige Rotationsachse auch zu einer translatorischen Förderung der Rotationskörper entlang des Förderwegs führt.

Anders ausgedrückt, die entlang des Förderwegs bewegbare Antriebsschiene bewegt sich in dem Betriebszustand weiterhin mit einer konstanten Geschwindigkeit V1 und die zweite Antriebsschiene bewegt sich im Betriebszustand mit einer konstanten Geschwindigkeit V2, wobei V1 größer als V2 ausfällt. Die translatorische Geschwindigkeit Vtrans der Rationskörper entlang des Förderwegs im Transportzustand fällt kleiner aus als die Geschwindigkeit V1 der (ersten) Antriebsschiene.

Bei einer weiteren Ausführungsform ist es ferner vorgesehen, dass die zweite Antriebsschiene sich in entgegengesetzter Richtung zur ersten Antriebsschiene bewegt.

Ferner wird darauf hingewiesen, dass in einer Unteransicht der jeweiligen Rotationskörper sich der erste Teilbereich und der zweite Teilbereich in zwei gegenüberliegenden Bereichen, insbesondere Kreishälften, befinden. Die Trennlinie dieser beiden Bereiche, insbesondere Kreishälften, verläuft parallel zum Förderweg.

Im Rahmen der vorliegenden Erfindung fällt der Förderweg geradlinig oder gekrümmt aus. Ferner kann der Förderweg neben einem oder mehreren geradlinigen Passagen auch eine oder mehrere gekrümmte Passagen umfassen. Weiterhin verläuft der Förderweg bevorzugt in einer Ebene und/oder umfasst einen konstanten Anstieg.

Die Erfassungsmittel sind insbesondere so ausgebildet, dass der überwachte Erfassungsbereich entlang des Förderwegs eine Breitenerstreckung umfasst, die zum Erfassen der vollständigen Mantelfläche aufgrund der Mantelabwicklung im Wesentlichen 4-mal so breit wie der Durchmesser der entsprechenden Rotationskörper ausfällt. Anders ausgedrückt, der Durchmesser der Rotationskörper bestimmt die Breitenerstreckung des Erfassungsbereichs. Zudem wird die Breitenerstreckung des Erfassungsbereichs auch durch den mittels der Antriebs- und Bremsschiene in den jeweiligen Rotationskörper eingebrachten Krafteintrag und somit durch die Geschwindigkeiten der Rotations- und Translationsbewegung bestimmt.

Die erfindungsgemäße Prüfvorrichtung ermöglicht ein Teilehandling für die Rotationskörper, das technisch einfach und somit kostengünstig umsetzbar ist und als "loses Stauhandling" bezeichnet werden kann. Die Rotationskörper, die mantelseitig inspiziert werden sollen, werden entlang des Förderwegs transportiert, wobei die Relativposition der einzelnen Rotationskörper und somit deren Abstand nahezu beliebig variieren kann. Die Rotationskörper können sich entweder berühren und sich entlang des Förderwegs aufstauen oder voneinander beabstandet sein. Falls sich die Rotationskörper in einem ersten Teilabschnitt des Förderwegs berühren, bzw. aufstauen, können diese auf einem zweiten Teilabschnitt des Förderwegs durch das Einbringen einer größeren Antriebskraft voneinander getrennt werden. Hierfür ist lediglich eine zweiteilige Antriebsschiene erforderlich, die im ersten Teilabschnitt eine erste Antriebskraft und im zweiten Teilabschnitt eine im Vergleich zur ersten Antriebskraft größere zweite Antriebskraft in den jeweiligen Rotationskörper einkoppelt, um die Geschwindigkeit der Rotationskörper entlang des Förderwegs in Bezug auf die translatorische und rotatorische Bewegung zu erhöhen.

Aufgrund der erfindungsgemäßen Fördermittel sind die Mantelflächen der jeweiligen Rotationskörper im Erfassungsbereich während der 360°-Volldrehung für die Erfassungsmittel stets vollständig sichtbar. Ferner wird durch die erfindungsgemäßen Fördermittel im Zusammenhang mit dem sich bereichsweise entlang des Förderwegs erstreckenden Erfassungsbereich erzielt, dass keine gesonderte Teilepositionierung erforderlich ist und eine hohe Teileleistung bei der mantelseitigen Prüfung der Rotationskörper erzielt werden kann. Ein weiterer Vorteil der erfindungsgemeäßen Prüfvorrichtung bzw. deren Fördermittel ist darin zu sehen, dass die Geometrie der Rotationskörper, die mantelseitig geprüft werden sollen, im gewissen Bereich variieren kann, ohne dass es zu einer Anpassung der Prüfvorrichtung und/oder der Fördermittel kommen muss.

Vorteilhafte Weiterbildungen der Erfindung sind in den Unteransprüchen beschrieben. In den Rahmen der Erfindung fallen sämtliche Kombinationen aus zumindest zwei von in der Beschreibung, den Ansprüchen und/oder den Figuren offenbarten Merkmalen.

Bei einer bevorzugten Ausführungsform der vorliegenden Prüfvorrichtung ist vorgesehen, dass die Antriebsschiene zur Bremsschiene verschwenkbar ist und der von der Antriebs- und Bremsschiene ausgebildete Auflagebereich somit um einen Neigungswinkel α zur Horizontalen geneigt verläuft.

Der Neigungswinkel α ist in diesem Zusammenhang so gewählt, dass die auf den jeweiligen Rotationskörper einwirkende Hangabtriebskraft größer ausfällt als eine Seitwärtskraft, die aus der Antriebskraft der Antriebsschiene resultiert. Vorteilhaft wird durch den geneigten Auflagebereich erzielt, dass die Rotationskörper im Transportzustand gegen die Bremsschiene - beim Inspizieren von Rotationskörpern mit Bundflächen - oder eine später noch genauer erläuterte Führungsschiene gedrückt werden, wobei der Neigungswinkel insbesondere zwischen 1° bis 80°, bevorzugt 2° bis 40° besonders bevorzugt 7° bis 14° beträgt.

Ferner wird darauf hingewiesen, dass die Hangabtriebskraft und die aus der Antriebskraft resultierende Seitwärtskraft quer zum Förderweg ausgerichtet sind. Vorteilhaft lässt sich durch eine solche Neigung eine sprungartige Hin- und Herbewegung der Rotationskörper bei der Förderung entlang des Förderwegs verhindern, was sich positiv auf die Qualität des mittels der Erfassungsmittel erzeugbaren Bildsignals auswirkt.

Weiterbildend ist es in diesem Zusammenhang bevorzugt, wenn die Fördermittel eine seitliche Führungsschiene umfassen, die entlang des Förderwegs zur Bremsschiene parallel ausgerichtet ist, und die mit der jeweiligen Mantelfläche der Rotationskörper im Transportzustand in Kontakt tritt und/oder aufgrund des geneigten Auflagebereichs eine Krafteintragsfläche für die auf die Rotationskörper wirkende Hangabtriebskraft ausbildet.

Die Führungsschiene kontaktiert die Rotationskörper im Transportzustand in einem hinteren Bereich der jeweiligen Mantelfläche, der gegenüberliegend zu einem vorderen Bereich der Mantelfläche ausgebildet ist und/oder von den Erfassungsmittel abgewandt ist.

Anders ausgedrückt, die Führungsschiene dient der Führung der Rotationskörper entlang einer Querrichtung des Förderwegs. Die Querrichtung des Förderwegs verläuft stets senkrecht zur Längsrichtung des Förderwegs.

Aufgrund des Neigungswinkels α des Auflagebereichs zur Horizontalen in Querrichtung werden die Rotationskörper im Transportzustand durch die aus der Schwerkraft resultierende Hangabtriebskraft stets gegen die Führungsschiene gedrückt, so dass die relative Position der Rotationskörper zur Antriebs- und/oder Bremsschiene in Bezug auf eine Querrichtung stets konstant ist.

Gemäß einer Weiterbildung dieser Ausführungsvariante sind die seitliche Führungsschiene und die Bremsschiene als ein monolithisches und/oder einstückiges Bauteil mit einer L-förmigem Querschnittsfläche ausgebildet.

Diese bevorzugte Ausführungsvariante ermöglicht eine kostengünstige konstruktive Umsetzung der erfindungsgemäßen Prüfvorrichtung und eignet sich insbesondere zur Inspektion von zylinderförmigen Prüfkörpern mit konstanter Höhe.

Unabhängig hiervon ist es im Rahmen der vorliegenden Erfindung auch bevorzugt vorgesehen, wenn die Fördermittel vertikale Einstellmittel aufweisen, die so ausgebildet sind, dass der lotrechte Abstand zwischen einer von dem Auflagebereich definierten Bezugsebne und der seitlichen Führungsschiene veränderbar ist, um Rotationskörper mit unterschiedlichen Höhen im Transportzustand mantelseitig, insbesondere in einem mittleren Bereich, zu stützen.

Der mittels der vertikalen Einstellmittel auswählbare Abstand wird insbesondere so gewählt, dass Bauteile mit einem Aspektverhältnis von <= 3, bevorzugt <=2, nicht umkippen, da sie trotz dem geneigten Auflagebereich von der seitlichen Führungsschiene gestützt werden und somit sicher entlang des Förderwegs transportiert werden können.

Ferner ist es bevorzugt, wenn die vertikalen Einstellmittel zusätzlich so ausgebildet sind, dass die Führungsschiene auch horizontal verstellbar ist, um auf unterschiedliche Durchmesser der Rotationskörper anpassbar zu sein.

Weiterbildend ist es vorgesehen, dass die Antriebsschiene und die Bremsschiene so voneinander beabstandet sind, dass im Transportzustand der Rotationskörper die jeweilige Rotationsachse R der Rotationskörper zwischen der Antriebsschiene und der Bremsschiene verläuft.

Weiterbildend oder alternativ ist ferner eine bevorzugte Ausführungsvariante mit von den Fördermitteln umfassten horizontalen Einstellmitteln vorgesehen, die so ausgebildet sind, dass der Abstand zwischen der Antriebsschiene und der Bremsschiene einstellbar ist, um Rotationskörper mit unterschiedlichen Durchmessern sicher zu transportieren.

Mittels der vertikalen und horizontalen Einstellmittel wird erzielt, dass die erfindungsgemäße Prüfvorrichtung dahingehend weiterbildbar ist, dass Rotationskörper mit unterschiedlichsten Mantelprofilen händelbar und somit mantelseitig erfassbar sind.

Wesentlich ist es in diesem Zusammenhang, dass der Abstand zwischen der Bremsschiene und der Antriebsschiene so gewählt wird, dass neben der translatorischen Bewegung auch eine rotatorische Bewegung durch das Einbringen der Antriebs- und der Bremskraft ermöglicht wird.

Eine bevorzugte Ausführungsvariante der erfindungsgemäßen Prüfvorrichtung sieht vor, dass die Antriebsschiene einen Bandantrieb mit einem entlang des Förderwegs bewegbaren Band umfasst, um die Antriebskraft in den ersten Teilbereich der Tragfläche einzubringen, wobei das Band mit der jeweiligen Tragfläche der Rotationskörper in Kontakt tritt.

Bevorzugt ist das Band eines solchen Bandantriebs als ein klassischer Keilriemen ausgebildet, wobei die Rotationskörper auf einer Außenseite des Riemens im Transportzustand aufliegen.

Alternativ sind auch Bandantriebe mit Bändern möglich, die ebene Gurte oder Keilriemen mit profilierter Riemenfläche umfassen. Von Vorteil ist hierbei, dass eine nachträgliche Integration der erfindungsgemäßen Prüfvorrichtung in eine bereits bestehende Zuführung mittels eines herkömmlichen Zuführbandes oder Riemenantriebs konstruktiv einfach realisiert werden kann.

Besonders bevorzugt ist es, wenn das Band des Bandantriebs als ein Rundriemen ausgebildet ist, da der erste Teilbereich, über dem die Antriebskraft in den Rotationskörper einkoppelbar ist, somit linienförmig ausfällt.

Zudem wird darauf hingewiesen, dass aufgrund der kreisförmigen Querschnittsfläche des Rundriemens sich die Auflagefläche zwischen dem Rundriemen und dem Rotationskörper (erster Teilbereich der Tragfläche) in Abhängigkeit des Neigungswinkels nicht ändert. Somit liegen die Rotationskörper auf der Antriebsschiene trotz der Verkippung in Querrichtung am gleichen Ort auf, womit sich eine konstante Auflagelänge und/oder Auflagebreite der Rotationskörper unabhängig vom gewählten Neigungswinkel α ergibt.

Ferner ist es besonders bevorzugt, wenn der Rundriemen in einer Rinne geführt ist, was eine einfache konstruktive Umsetzung des Bandantriebs ermöglicht.

Zudem ist bei dieser Ausführungsform von Vorteil, dass der Rundriemen wenig Bauraum benötigt. Konkret überragt ein Bandantrieb mit Rundriemen nicht die Breitenerstreckung der Rotationskörper im Transportzustand, so dass unmittelbar benachbart zu den geförderten Rotationskörpern ein freier Bauraum entsteht, der in vorteilhafter Weise genutzt werden kann, um weitere Komponenten der erfindungsgemäßen Prüfvorrichtung, etwa bevorzugt vorgesehene Auflicht-Beleuchtungsmittel, aufzunehmen.

Bei einer konkreten konstruktiven Ausgestaltung im Rahmen einer bevorzugten Weiterbildung umfasst der Rundriemen eine Riemenstärke von 4mm. Die dazugehörige Riemenführung hat bei dieser Ausführungsvariante eine Breite von nur 5mm.

Wird nun die Führungsschiene so eingestellt, dass der Rundriemen auf der Tragfläche der Rotationskörper 2,5mm vom Außendurchmesser nach innen versetzt positioniert ist, überragt die Antriebsschiene den Außendurchmesser der Rotationskörper nicht in Querrichtung, so dass eine Auflicht-Beleuchtung und/oder die Erfassungsmittel in unmittelbarer Nähe zu den förderbaren Rotationskörpern positioniert werden können.

Ferner ist es bevorzugt vorgesehen, dass die Erfassungsmittel durch wenigstens eine Kamera, insbesondere eine Matrixkamera, ausgebildet sind. Die wenigstens eine Kamera ist in einer Draufsicht auf die Prüfvorrichtung seitlich zu den Fördermitteln und benachbart zur Antriebsschiene oder der Bremsschiene angeordnet, wobei wenigstens eine Kamera auf den Erfassungsbereich so ausgerichtet ist, dass die jeweilige Mantelfläche der Rotationskörper im Erfassungsbereich durch mehrere Bildaufnahmen bezüglich einer jeweiligen Höhenerstreckung zumindest teilweise und bezüglich einer jeweiligen umfangsseitigen Erstreckung vollständig erfasst werden kann.

Die Blickrichtung der Kamera verläuft bevorzugt quer zum Förderweg und/oder der Förderrichtung der Fördermittel.

Jede Bildaufnahme erfasst eine Vorderansicht einer oder mehrerer Mantelflächen, die sich zum jeweiligen Erfassungszeitpunkt innerhalb des Erfassungsbereichs befinden. Eine Bildaufnahme bildet somit zumindest einen Mantelflächenbereich ab. Mehrere Bildaufnahmen, die zeitlich unmittelbar aufeinanderfolgend erzeugt wurden, umfassen somit mehrere Mantelflächenbereiche, die gemeinsam eine einzelne Mantelfläche wiedergeben.

Es wird darauf hingewiesen, dass die von den einzelnen Bildaufnahmen erfassten Mantelflächenbereiche sich randseitig überlappen.

Aufgrund der kontinuierlichen Rotationsbewegung der Rotationskörper sowie der Breitenerstreckung des Erfassungsbereichs wird erzielt, dass sämtliche Mantelflächen durch eine Abfolge von Bildaufnahmen, die zeitlich versetzt erzeugt wurden, vollständig erfasst werden.

Ferner ist es in diesem Zusammenhang weiterbildend besonders bevorzugt, wenn die Erfassungsmittel Auswertemittel umfassen, die mit der Kamera in Wirkverbindung stehen. Diese Auswertemittel sind so ausgebildet, dass aus den Bildaufnahmen für sämtliche Rotationskörper ein Abbild der jeweiligen Mantelfläche erzeugt werden kann. Hierfür sind die Erfassungsmittel insbesondere so ausgebildet, dass aus jeder Bildaufnahme jeweils ein Teilausschnitt entnehmbar und im Abbild zum Nachbilden der Mantelfläche zusammensetzbar ist.

Die Breite des Teilausschnitts ist durch die Anzahl der Bildaufnahmen der jeweiligen Mantelfläche definiert. Es hat sich gezeigt, dass zumindest 50 Bildaufnahmen erforderlich sind, um im Abbild kritische Störgrößen zu erkennen. Besser für die Qualität des Abbilds ist es, wenn die Anzahl auf 100 bis 150 Bildaufnahmen erhöht wird. Vorteilhaft lässt sich hierdurch die Breitenerstreckung der Teilausschnitte, die aus der zeitlich versetzten Bildaufnahmen entnommen werden, reduzieren, wodurch auch der negative Einfluss der Krümmung der Mantelfläche in jedem Teilausschnitt reduziert werden kann.

Ferner ist es bevorzugt vorgesehen, wenn die Prüfvorrichtung Auflicht-Beleuchtungsmittel umfasst. Die Auflicht-Beleuchtungsmittel sind derart ausgebildet, dass die durch den Erfassungsbereich bewegbaren Rotationskörper von einer Vorderansicht, die zu den Erfassungsmitteln ausgerichtet ist, beleuchtet werden können.

Es wird in diesem Zusammenhang darauf hingewiesen, dass die Auflicht-Beleuchtungsmittel dazu ausgebildet und/oder eingerichtet sind, eine Hellfeldfeld-Beleuchtung und/oder eine Mischfeld-Beleuchtung und/oder eine Dunkelfeld-Beleuchtung und/oder eine Reflexions-Beleuchtung zu erzeugen.

Bevorzugt ist in diesem Zusammenhang die Ausgestaltung der Auflicht-Beleuchtungsmittel durch Dunkelfeld-Beleuchtungsmittel. Besonders bevorzugt ist es hierbei, wenn die Dunkelfeld-Beleuchtungsmittel durch eine Ring-Beleuchtung oder durch eine Dom-Beleuchtung ausgebildet sind.

Zudem ist es in diesem Zusammenhang besonders bevorzugt, wenn die Dunkelfeld-Beleuchtungsmittel unmittelbar benachbart zur Antriebsschiene und/oder einer Breitenerstreckung der im Transportzustand förderbaren Rotationskörper positioniert sind, um Lichtstrahlen zu erzeugen, die im Wesentlichen senkrecht zu einer Blickrichtung der Erfassungsmittel ausgerichtet sind. Unmittelbar benachbart bedeutet in diesem Zusammenhang, dass die Beleuchtungsmittel in unmittelbarer Nähe zur Antriebsschiene und/oder einer Breitenerstreckung der Rotationskörper im Transportzustand angeordnet sind, derart, dass Lichtstrahlen erzeugbar sind, die sich im Wesentlichen senkrecht zur Blickrichtung der Erfassungsmittel ausbreiten und somit unter einem sehr kleinen Winkel auf die Mantelfläche auftreffen.

Durch die geringe Breitenerstreckung der Fördermittel in einer quer und/senkrecht zum Förderweg verlaufenden Querrichtung wird neben der Möglichkeit zur unmittelbar angrenzenden Positionierung der Auflicht-Beleuchtungsmittel zudem erzielt, dass die Entfernung der Erfassungsmittel entlang der Querrichtung in Bezug auf die entlang des Förderwegs bewegbaren Rotationskörper klein gewählt werden kann. Die erfindungsgemäße Prüfvorrichtung ermöglicht es somit, dass der Abstand zwischen den Erfassungsmitteln und dem jeweiligen Rotationskörper im Erfassungsbereich nahezu beliebig wählbar ist.

Von Vorteil ist hierbei, dass sich bei einem kleineren Abstand zwischen den Erfassungsmitteln und dem Rotationskörper eine Bildaufnahme von einem Mantelflächenbereich erzeugen lässt, aus der ein Teilausschnitt entnommen werden kann, der im Vergleich zu einem Teilausschnitt einer Bildaufnahme, die in einem größeren Abstand erzeugt wurde, eine größere Breitenerstreckung (in Bezug auf die Förderrichtung) umfasst.

Dies hat zur Folge, dass sich die Anzahl an Bildaufnahmen zum Abbilden einer vollständigen Mantelfläche, insbesondere bei gleichbleibender Aufnahmequalität, reduzieren lässt, wodurch sich die Anzahl an Rotationskörper, die pro Zeiteinheit von der Prüfvorrichtung inspiziert werden können, erhöhen lässt. Prüfanlagen mit hoher Teileleistung ermöglichen wiederum einen wirtschaftlichen Betrieb.

Gemäß einer bevorzugten Weiterbildung umfasst die erfindungsgemäße Prüfvorrichtung Durchlicht-Beleuchtungsmittel. Die Durchlicht-Beleuchtungsmittel sind so ausgebildet, dass der Erfassungsbereich vollständig mit fokussiertem Licht ausleuchtbar ist, um Rotationskörper innerhalb des Erfassungsbereichs von einer Hinteransicht, die von den Erfassungsmitteln abgewandt ist, auszuleuchten.

Schließlich ist es im Rahmen der vorliegenden erfindungsgemäßen Prüfvorrichtung weiterbildend auch vorgesehen, wenn die Durchlicht-Beleuchtungsmittel eine Sammellinse, insbesondere in der konkreten Ausgestaltung einer Fresnell-Linse, und eine punktförmige Lichtquelle umfassen, um fokussiertes endozentrisches Licht zum Ausleuchten des Erfassungsbereichs zu erzeugen.

Eine Fresnel-Linse bietet den Vorteil einer geringen Dicke in Bezug auf die von den Lichtstrahlen durchsetzten Linsenbauhöhe.

Auf vorteilhafte Weise ermöglichen die Durchlicht-Beleuchtungsmittel durch das Erzeugen von fokussiertem, endozentrischem Durchlicht eine äußerst exakte Erfassung der Position der Rotationskörper im Bildsignal. Durch diese genaue Erfassung der Position der Rotationskörper im Bildsignal wird eine genaue Bestimmung der Breite des Teilausschnitts in Umfangsrichtung des jeweiligen Rotationskörpers ermöglicht. Somit lässt sich ein Abbild mittels der Auswertemittel erzeugen, dass frei von sich überlappenden Randbereichen ist.

Ferner ist im Zusammenhang der Beleuchtung mit fokussiertem, endozentrischem Durchlicht als vorteilhaft zu erwähnen, dass an Rotationskörper mit einem Außengewinde Bildsignale und/oder mehrere Bildaufnahmen erzeugt werden können, die eine Darstellung in Form einer Gewindeabwicklung ermöglichen.

Bevorzugt stellt das Abbild somit eine Gewindeabwicklung dar.

Schließlich wird im Rahmen der vorliegenden Erfindung auch Schutz beansprucht für ein Prüfsystem, das eine klassische Linearschiene mit einer erfindungsgemäßen Prüfvorrichtung kombiniert.

Die Linearschiene umfasst eine Gleitfläche zur Aufnahme der Rotationskörper sowie Vortriebsmittel, um Vibrationen zu erzeugen und die Rotationskörper somit auf der Gleitfläche entlang einer Transportrichtung in Folge der Vibrationen translatorisch zu bewegen. Konkret ist es nun vorgesehen, dass die Gleitfläche der Linearschiene in einem Zwischenbereich eine Aussparung zur Aufnahme der erfindungsgemäßen Prüfvorrichtung umfasst, um die mittels der Linearschiene förderbaren Rotationskörper mantelseitig zu inspizieren.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften der erfindungsgemäßen Prüfvorrichtung durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen sind Elemente gleicher Funktion und/oder gleichen Aufbaus mit demselben Bezugszeichen bezeichnet.

Es zeigen:
- Fig. 1a-c:: eine schematische Darstellung einer erfindungsgemäßen Prüfvorrichtung gemäß einer ersten beispielhaften Ausführungsform in drei unterschiedlichen Ansichten;
- Fig 2:: eine schematische Darstellung einer erfindungsgemäßen Prüfvorrichtung gemäß einer zweiten beispielhaften Ausführungsform in einer perspektivischen Ansicht;
- Fig. 3a/b:: eine schematische Darstellung einer erfindungsgemäßen Prüfvorrichtung gemäß einer dritten beispielhaften Ausführungsform in zwei unterschiedlichen Ansichten;
- Fig. 4a-c:: drei Schnittansichten der erfindungsgemäßen Prüfvorrichtung gemäß der dritten beispielhaften Ausführungsform beim Prüfen von möglichen Rotationskörpern mit unterschiedlicher Geometrie;
- Fig. 5:: eine schematische Darstellung einer erfindungsgemäßen Prüfvorrichtung gemäß einer vierten beispielhaften Ausführungsform in einer Querschnitt-Seitenansicht;
- Fig. 6:: eine schematische Darstellung einer erfindungsgemäßen Prüfvorrichtung gemäß einer fünften beispielhaften Ausführungsform mit ersten Auflicht-Beleuchtungsmitteln in einer seitlichen Querschnitt-Ansicht;
- Fig. 7a/b:: eine schematische Darstellung einer erfindungsgemäßen Prüfvorrichtung gemäß einer sechsten Ausführungsform mit zweiten Auflicht-Beleuchtungsmitteln in einer Schnittansicht und in einer Draufsicht und in
- Fig. 8:: eine schematische Darstellung eines erfindungsgemäßen Prüfsystems, das eine erfindungsgemäße Prüfvorrichtung umfasst.

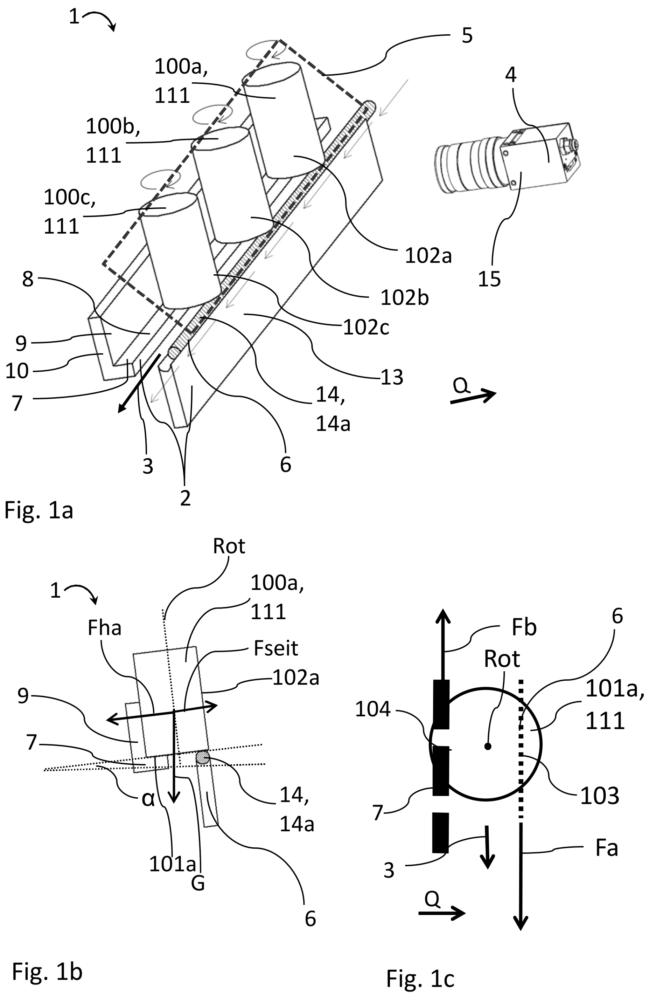

Die **Fig. 1a****-c** zeigen eine erfindungsgemäße Prüfvorrichtung 1 gemäß einer ersten beispielhaften Ausführungsform in drei unterschiedlichen Ansichten.

In der **Fig. 1a** ist die erfindungsgemäße Prüfvorrichtung 1 gemäß der ersten beispielhaften Ausführungsform in einer perspektivischen Ansicht abgebildet.

Die erfindungsgemäße Prüfvorrichtung 1 ist zur Inspektion von Mantelflächen 102a-c von Rotationskörpern 100a-c, die entlang eines Förderwegs 3 förderbar sind, eingerichtet. Die erfindungsgemäße Prüfvorrichtung 1 umfasst Fördermittel 2 zum Fördern der Rotationskörper 100a-c entlang des Förderwegs 3 sowie Erfassungsmittel 4 zum Erfassen der Mantelfläche 102a-c des jeweiligen Rotationskörpers 100a-c in einem Erfassungsbereich 5 und zum Erzeugen von wenigstens einem Bildsignal von den jeweiligen Mantelflächen 102a-c.

Die erfindungsgemäßen Erfassungsmittel 4 sind vorliegend durch eine Kamera 15 ausgebildet. Die Kamera 15 ist zu den Fördermitteln 2 beabstandet angeordnet.

Ferner ist die Kamera 15 so eingerichtet, dass der durch ein gestricheltes Rechteck symbolisch dargestellte Erfassungsbereich 5, der sich in einem definierten Abschnitt des Förderwegs 3 erstreckt, erfasst wird, um die jeweilige Mantelfläche 102a-c der Rotationskörper 100a-c durch mehrere Bildaufnahmen vollständig zu erfassen.

Die erfindungsgemäßen Fördermittel 2 umfassen eine Antriebsschiene 6 und eine Bremsschiene 7. Die Antriebsschiene 6 und die Bremsschiene 7 bilden gemeinsam einen Auflagebereich 8 für die stehende Aufnahme der Rotationskörper 100a-c aus, um die Rotationskörper 100a-c in einem Transportzustand 111 entlang des Förderwegs 3 nacheinander und/oder in einer Reihe translatorisch zu fördern und die Rotationskörper 100a-c gleichzeitig um ihre jeweilige Rotationsachse Rot zu rotieren.

Im Transportzustand 111 berührt die jeweilige Mantelfläche 102a-c der Rotationskörper 100a-c nicht den Auflagebereich 8. Anders ausgedrückt, die Mantelfläche 102a-c steht nicht mit der Antriebsschiene 6 oder mit der Mantelschiene 7 in Kontakt, da die Rotationskörper 100a-c von der erfindungsgemäßen Prüfvorrichtung 1 stehend translatorisch und rotatorisch bewegbar sind. Dies bedeutet, dass eine Tragfläche 101a-c der Rotationskörper 100a-c im Transportzustand mit dem Auflagebereich 8 in Kontakt steht, wobei jeder Rotationskörper zumindest eine Tragfläche 101a-c umfasst, die senkrecht zu einer Rotationsachse des jeweiligen Rotationskörpers ausgerichtet ist.

Die Antriebsschiene 6 und die Bremsschiene 7 sind entlang des Förderwegs 3 gleisartig und/oder parallel ausgerichtet, derart, dass der jeweilige Rotationskörper 100a-c im Transportzustand 111 durch Reibung einerseits zwischen der Antriebsschiene 6 und einem ersten Teilbereich 103 (vgl. hierzu die **Fig. 1c****)** der jeweiligen Tragfläche 101a mit einer Antriebskraft Fa und andererseits zwischen der Bremsschiene 7 und einem zweiten Teilbereich 104 (vgl. hierzu die **Fig. 1c**) der jeweiligen Tragfläche 101a mit einer Bremskraft Fb sowohl translatorisch entlang des Förderwegs 3 als auch rotatorisch um die jeweilige Rotationsachse Rot bewegbar sind.

Erfindungsgemäß vorteilhaft erstreckt sich der Erfassungsbereich 5 entlang eines Abschnitts des Förderwegs 3.

Ferner wird darauf hingewiesen, dass die Fördermittel 2 so ausgebildet sind, dass der Abstand zwischen der Antriebsschiene 6 und der Bremsschiene 7 so gewählt ist, dass die jeweilige Rotationsachse Rot der Rotationskörper 100a-c in dem Transportzustand 111 zwischen der Antriebsschiene 6 und der Bremsschiene 7 verläuft.

Die erfindungsgemäßen Fördermittel 2 umfassen zudem eine seitliche Führungsschiene 9, die entlang des Förderwegs 3 und somit zur Bremsschiene 7 und/oder Antriebsschiene 8 parallel ausgerichtet ist.

Im Transportzustand 111 tritt diese Führungsschiene 9 mit der jeweiligen Mantelfläche 102a-c der Rotationskörper 100a-c in Kontakt. Die Führungsschiene 9 begrenzt somit den von der Antriebsschiene 6 und der Bremsschiene 7 ausgebildeten Auflagebereichs 8 in Bezug zu einer Querrichtung Q, die senkrecht zum Förderweg 3 und/oder einer etwaigen Förderrichtung verläuft.

Ferner ist im vorliegenden Ausführungsbeispiel die Führungsschiene 9 zusammen mit der Bremsschiene 7 durch ein monolithisches Bauteil ausgebildet, das einen L-förmigen Querschnitt umfasst. Durch diese bevorzugte Ausgestaltung der Brems- und Führungsschiene 7/9 lässt sich der parallele Verlauf der beiden Schienen konstruktiv einfach umsetzen, was den Montageaufwand reduziert.

Ferner geht aus der Darstellung hervor, dass die Antriebsschiene 6 zur Bremsschiene 7 verschwenkt ist, was zur Folge hat, dass der Auflagebereich 8 um einen Neigungswinkel α zur Horizontalen H geneigt verläuft (vgl. hierzu die **Fig. 1b**).

Es wird darauf hingewiesen, dass der Neigungswinkel α so gewählt ist, dass die auf die jeweiligen Rotationskörper 100a-c wirkende Hangabtriebskraft Fha stets größer ausfällt als die aus der Antriebskraft Fa der Antriebsschiene 6 resultierende Seitwärtskraft Fseit. Somit werden die Rotationskörper 100a-c im Transportzustand 111 gegen die Führungsschiene 9 gedrückt, was einen gleichmäßige translatorische und rotatorische Bewegung der Rotationskörper 100a-c zu Folge hat und sich positiv auf die Qualität der mittels der Erfassungsmitteln 4 erzeugten Bildaufnahmen auswirkt.

Der Neigungswinkel α liegt hierbei zwischen 1° bis 80°, wobei im dargestellten Ausführungsbeispiel ein Neigungswinkel α von 12° realisiert ist.

Schließlich geht aus der Darstellung auch noch die konstruktive Umsetzung der erfindungsgemäßen Antriebsschiene 6 hervor, die vorliegend durch einen Bandantrieb 13 mit einem entlang des Förderwegs 3 bewegbaren Band 14 ausgebildet ist.

Das Band 14, das sich entlang des Förderwegs 3 mit konstanter Geschwindigkeit V1 bewegen lässt, ist als ein Rundriemen 14a ausgebildet. Dies bietet den Vorteil, dass der erste Teilbereich 103, in dem der jeweilige Rotationskörper 100a-c mit der Antriebsschiene 6 in Kontakt steht, hinsichtlich einer Quer zur Förderrichtung verlaufenden Breitenerstreckung minimiert werden kann.

Die **Fig. 1b** zeigt die erfindungsgemäße Prüfvorrichtung 1 in einer Querschnittsansicht mit einem Rotationskörper 100a im Transportzustand 111.

Aus der Darstellung geht hervor, dass der Rotationskörper 100a eine Rotationsachse Rot umfasst, die konzentrisch zu der Mantelfläche 102a des Rotationskörpers 100a verläuft. Ferner umfassen die Rotationskörper 100a die Tragfläche 101a, die senkrecht zu der Rotationsachse Rot des Rotationskörpers 102a ausgerichtet ist.

Im Transportzustand 111 steht die Tragfläche 101a des Rotationskörpers 100a mit der Antriebsschiene 6 und der Bremsschiene 7 in Kontakt, wobei die Rotationsachse Rot des Rotationskörpers 100a den Aufnahmebereich 8 zwischen der Bremsschiene 7 und der Antriebsschiene 6 schneidet (vgl. hierzu auch die **Fig. 1c****).**

Ferner sind die auf den Rotationskörper 100a wirkenden Kräfte grafisch und stark schematisiert in der **Fig. 1b** dargestellt. Aufgrund der Verkippung der Antriebsschiene 6 zur Bremsschiene 7 um den Neigungswinkel α führt die auf den Rotationskörper 100a einwirkende Gewichtskraft G zu einer Hangabtriebskraft Fha, die den jeweiligen Rotationskörper 100a gegen die seitliche Führungsschiene 9 drückt. Die Führungsschiene 9 stützt den jeweiligen Rotationskörper somit mantelseitig.

Zudem wirkt auf den Rotationskörper 100a im Transportzustand 111 eine Seitwärtskraft Fseit, die aus der per Reibung zwischen dem Rundriemen 14a in den ersten Teilbereich 103 einwirkende Antriebskraft Fa und der per Reibung zwischen der starr ausgebildeten Bremsschiene 7 einwirkenden Bremskraft Fb resultiert.

Da der Neigungswinkel α so gewählt ist, dass die erzeugte Hangabtriebskraft Fha größer ist als die Seitwärtskraft Fseit, wird der Rotationskörper 100a sicher entlang des Förderwegs 3 geführt.

In der **Fig. 1c** ist eine Unteransicht des in der **Fig. 1b** gezeigten Rotationskörpers 100a dargestellt. Ferner ist der erste und der zweite Teilbereich 103/104 schematisch gezeigt.

Aus der figürlichen Darstellung lässt sich erkennen, dass die Rotationsachse Rot zwischen der Antriebsschiene 6 und der Bremsschiene 7 verläuft.

Ferner wird deutlich, dass die Breitenerstreckung des ersten Teilbereichs 103 aufgrund des Rundriemens 14a hinsichtlich einer quer zum Förderweg 3 verlaufenden Querrichtung Q hinsichtlich der Breitenerstreckung des zweiten Teilbereichs 104 kleiner ausfällt. Zudem sind Richtung und Betrag der Antriebskraft Fa und der Bremskraft Fb symbolisch dargestellt, wobei auch deutlich wird, dass die Antriebskraft Fa die Bremskraft Fb betragsmäßig überragt und entgegengesetzt ausgerichtet ist.

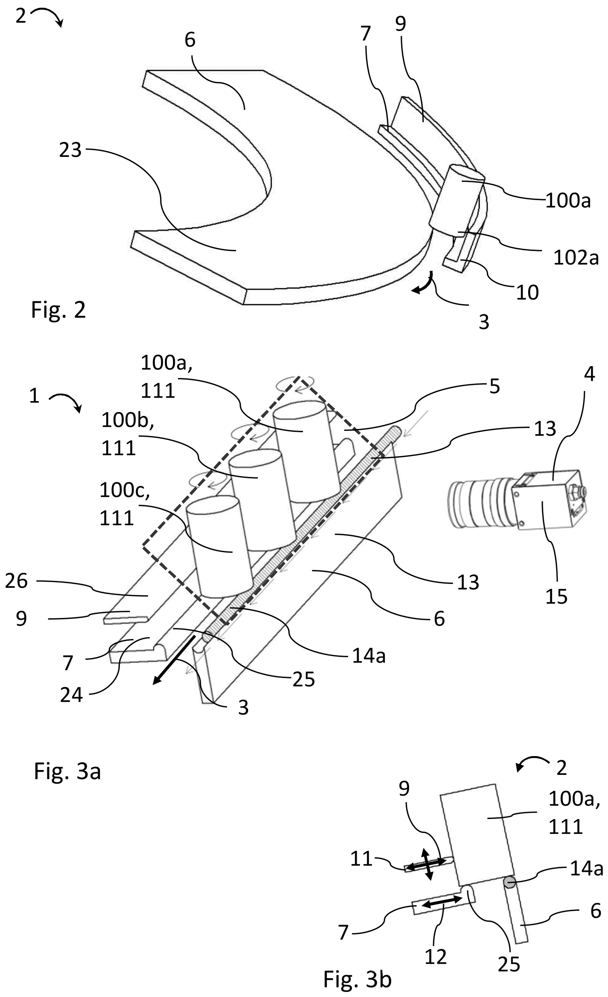

Die **Fig. 2** zeigt eine weitere mögliche Ausführungsform der erfindungsgemäßen Fördermittel 2, wobei die Antriebsschiene 6 sowie das L-förmige Bauteil 10, welches die Bremsschiene 7 sowie die Führungsschiene 9 ausbildet, nur bereichsweise dargestellt sind. Bei dieser Ausführungsvariante verläuft der Förderweg 3 gekrümmt und/oder erstreckt sich zumindest bereichsweise kreisförmig um einen gemeinsamen Mittelpunkt.

Die Antriebsschiene 6 ist vorliegend durch eine ringförmige Kreisscheibe 23 ausgebildet, die im Mittelpunkt rotierbar gelagert ist. Die Bremsschiene 7, die durch einen Metallsteg ausgebildet ist, erstreckt sich auch kreisförmig um den Mittelpunkt, wobei die Bremsschiene 7 zum äußeren Umfang der Kreisscheibe 23 um einen konstanten Abstand beabstandet verläuft.

Ferner ist ein Rotationskörper 100a dargestellt, der durch das Erzeugen einer Relativbewegung zwischen der Kreisscheibe 23 und dem L-förmigen Bauteil 10 translatorisch entlang des gekrümmten Förderwegs 3 bewegt werden kann, während der Rotationskörper 100a zeitgleich um seine Rotationsachse Rot rotiert.

Vorteilhaft lässt sich somit die Mantelfläche 102a des Rotationskörpers 100a über nicht dargestellte Erfassungsmittel 4 vollständig erfassen, um Störstellen zu erkennen.

In den **Fig. 3a****/b** ist eine erfindungsgemäße Prüfvorrichtung 1 gemäß einem dritten, bevorzugten Ausführungsbeispiel gezeigt.

Die Prüfvorrichtung 1 gemäß dem dritten Ausführungsbeispiel umfasst einen geradlinigen Förderweg 3.

In Übereinstimmung zu der erfindungsgemäßen Prüfvorrichtung 1 gemäß dem ersten Ausführungsbeispiel ist die Antriebsschiene 6 durch einen Bandantrieb 13 mit einem Rundriemen 14a ausgebildet, der an einer Oberseite mit dem ersten Teilbereich 103 des jeweiligen Rotationskörpers 100a-c im Transportzustand 111 in Kontakt tritt.

Die Bremsschiene 7 ist durch einen geradlinigen Steg 24 ausgebildet, der randseitig an einer Oberseite eine halbrundförmige Erhebung 25 umfasst, die mit dem zweiten Teilbereich 104 des jeweiligen Rotationskörpers 100a-c im Transportzustand 111 in Kontakt tritt.

Auf vorteilhafte Weise lässt sich durch die jeweilige halbkreisförmige Kontaktfläche 25 der Antriebs- 6 und Bremsschiene 7, die jeweilige Breitenerstreckung des ersten und des zweiten Teilbereichs 103/104 entlang einer quer zum Förderweg 3 verlaufenden Querrichtung Q minimieren und/oder linienförmig ausgestalten.

Ferner ist die seitliche Führungsschiene 9 durch ein Stegelement 26 ausgebildet, das nunmehr beabstandet zur Bremsschiene 7 als eigenständiges und/oder separates Bauteil ausgebildet ist.

Die Erfassungsmittel 4 werden durch eine Kamera 15 ausgebildet. Der Erfassungsbereich 5 erstreckt sich abschnittsweise entlang des Förderwegs 3, wobei der Erfassungsbereich 5 entlang des Förderwegs 3 eine Breitenerstreckung umfasst, die so gewählt ist, dass sich sämtliche Rotationskörper 100a-c mantelseitig vollständig erfassen lassen. Anders ausgedrückt, der Erfassungsbereich 5 ist so dimensioniert, dass der jeweilige Rotationskörper 100a-c innerhalb des Erfassungsbereichs 5 eine Vollumdrehung um seine jeweilige Rotationsachse Rot vollzieht.

Die Fig. 3b zeigt eine Querschnittansicht der erfindungsgemäßen Prüfvorrichtung 1 gemäß dem dritten Ausführungsbeispiel.

Darin geht hervor, dass die Fördermittel 2 nicht im Detail dargestellte vertikale Einstellmittel 11 umfassen, die so ausgebildet sind, dass der lotrechte Abstand zwischen einer von dem Auflagebereich 8 definierten Bezugsebne und der seitlichen Führungsschiene 9 in Abhängigkeit einer Höhe der Rotationskörper 100a-c im Transportzustand 111 angepasst werden kann.

Auf vorteilhafte Weise lässt sich die Prüfvorrichtung 1 somit derart anpassen, dass Rotationskörper 100a-c mit unterschiedlicher Höhe im Transportzustand 111 mantelseitig gestützt werden können, um neben dem Erfassen der vollständigen Mantelfläche auch einen stabilen Transport zu erzielen.

Weiterhin geht aus der Darstellung hervor, dass die Fördermittel 2 zudem auch nicht im Detail dargestellte horizontale Einstellmittel 12 umfassen. Die horizontalen Einstellmittel 12 sind so ausgebildet, dass der Abstand zwischen der Antriebsschiene 6 und der Bremsschiene 7 einstellbar ist, um Rotationskörper 100a-c mit unterschiedlichen Durchmessern zu fördern.

Somit lässt sich die erfindungsmäße Prüfvorrichtung 1 an unterschiedliche Rotationskörper 100a-c anpassen.

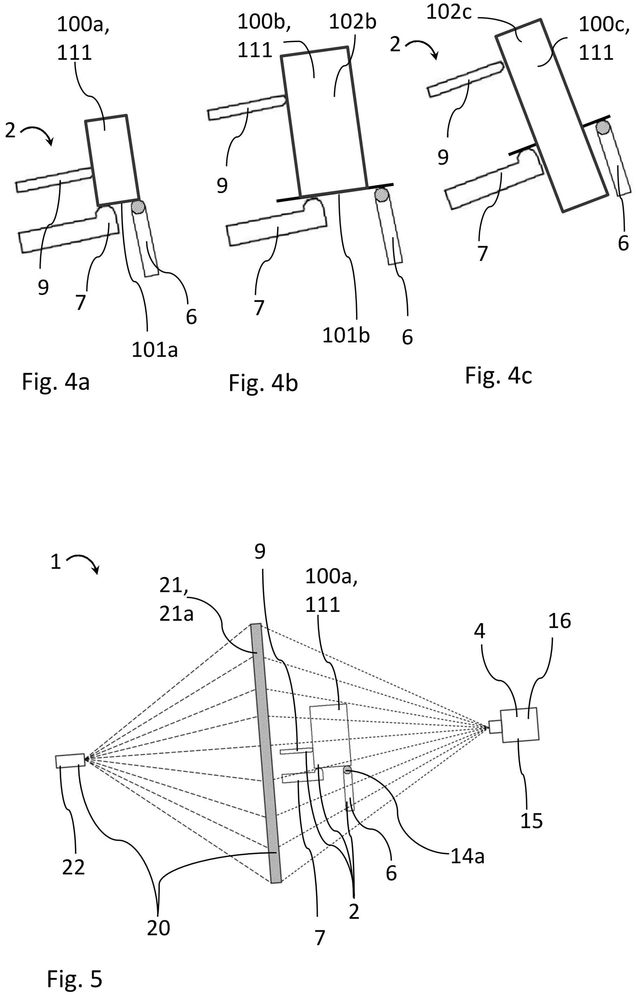

Die **Fig. 4a****/b** zeigen in einer Querschnittansicht die Fördermittel 2 der erfindungsgemäßen Prüfvorrichtung 1 gemäß der dritten Ausführungsvariante nach einem manuellen Anpassen mittels der nicht im Detail dargestellten horizontalen Einstellmittel 12 sowie der nicht im Detail dargestellten vertikalen Einstellmittel 11 zum Handhaben unterschiedlicher Prüfkörper 100a-c. In den **Fig. 4a****/b** sind jeweils die Antriebsschiene 6, die Bremsschiene 7 sowie die Führungsschiene 9 dargestellt, die jeweils ein Rotationskörper 100a-c mit individueller Geometrie im Transportzustand 111 aufnehmen.

In der **Fig. 4a** ist der Rotationskörper 100a durch einen Zylinder mit einem Durchmesser von 1cm und einer Höhe von 2cm ausgebildet. Die nicht grafisch dargestellten vertikalen Einstellmittel 11 und die auch nicht dargestellten horizontalen Einstellmittel 12 wurden entsprechend angepasst. Der Abstand zwischen der Antriebsschiene 6 und der Bremsschiene 7 beträgt hierbei 0,5cm. Der lotrechte Abstand zwischen der Führungsschiene 9 und einer vom Auflagebereich 9 definierten Bezugsebene beträgt hierbei 1cm.

In der **Fig. 4b** ist der Rotationskörper 100b durch einen Zylinder mit einem Flansch ausgebildet, wobei der Flansch bodenseitig und/oder als radiale Verlängerung der Tragfläche 101b des Rotationskörpers 100b ausgeführt ist. Die Antriebsschiene 6 und die Bremsschiene 7 kontaktieren hierbei die Tragfläche 101b, die bereichsweise durch den Flansch ausgebildet ist. Die Führungsschiene 9 kontaktiert die Mantelfläche 102b in einem hinteren Bereich.

Die **Fig. 4c** zeigt Fördermittel 2 und einen Rotationskörper 100c im Transportzustand 111, wobei die Fördermittel 2 eine Antriebsschiene 6, eine Bremsschiene 7 und eine Führungsschiene 9 umfassen. Der entsprechende Rotationskörper 100c umfasst eine Bundfläche, die den zylinderförmigen Hauptkörper des Rotationskörpers 100c in radialer Richtung überragt und die Mantelfläche 102c des Rotationskörpers 100c in einem oberen und einen unteren Teilbereich aufteilt. Ferner stehen die Antriebsschiene 6 und die Bremsschiene 7 mit der jeweiligen Bundfläche im Transportzustand 111 an einer Unterseite in Kontakt.

Die Mantelfläche 102c des Rotationskörpers 100c, die von den Erfassungsmitteln 4 umfangsseitig geschlossen erfasst werden soll, erstreckt sich oberhalb dieser Bundfläche.

Mit anderen Worten, die Erfassungsmittel 4 sind in diesem Ausführungsbeispiel so ausgebildet, dass die Mantelfläche 102c bezüglich der Höhenerstreckung teilweise und bezüglich der umfangsseitigen Erstreckung vollständig erfasst werden kann.

Die **Fig. 5** zeigt eine erfindungsgemäße Prüfvorrichtung 1 gemäß einer vierten bevorzugten Ausführungsvariante mit Fördermitteln 2, die bereits im Zusammenhang mit der Prüfvorrichtung 1 gemäß der dritten Ausführungsvariante im Detail erläutert wurden. Zum Vermeiden von Wiederholungen, werden im Folgenden nur die Eigenschaften beschrieben, die nicht bereits im Zusammenhang der **Figuren 3a** bis **4c** erläutert wurden. Für Bezugsziffern, die im Folgenden nicht beschrieben sind, gelten somit die Ausführungen von oben.

In der **Fig. 5** ist die erfindungsgemäße Prüfvorrichtung 1 in einer stark schematisierten, seitlichen Querschnitt-Ansicht dargestellt.

Die erfindungsgemäße Prüfvorrichtung 1 umfasst im dargestellten Abschnitt des Förderwegs 3 Durchlicht- Beleuchtungsmittel 20.

Die Durchlicht-Beleuchtungsmittel 20 sind so ausgebildet, dass der Erfassungsbereich 5 vollständig mit fokussiertem Licht ausgeleuchtet werden kann, um sämtliche Rotationskörper 100a, die sich im Transportzustand 111 im Erfassungsbereich 5 befinden, von einer Hinteransicht, die von den Erfassungsmitteln 4 abgewandt ist, zu beleuchten.

Die Durchlicht-Beleuchtungsmittel 20 sind somit in der Querschnittansicht gegenüberliegend zu den Erfassungsmitteln 4 positioniert, wobei sich die Fördermittel 2 zwischen den Durchlicht-Beleuchtungsmitteln 20 und den Erfassungsmitteln 4 erstrecken. Die Durchlicht-Beleuchtungsmittel 20 sind eingerichtet, um fokussiertes Licht zu erzeugen, das nach dem Auftreffen auf die Rotationskörper 100a-c von den Erfassungsmitteln 4 erfasst werden kann.

Die Durchlicht-Beleuchtungsmittel 20 weisen vorliegend eine Sammellinse 21 und eine punktförmige Lichtquelle 22 auf, um die Rotationskörper 100a-c im Erfassungsbereich 5 mit fokussiertem endozentrischem Licht von einer Hinteransicht zu beleuchten.

Die Sammellinse 21 ist vorliegend durch eine Fresnell-Linse 21a ausgebildet, die sich durch eine geringe Dicke, in Bezug auf den Strahlengang der von der Lichtquelle 22 erzeugten Lichtstrahlen, auszeichnet.

Die Erfassungsmittel 4, die durch eine Kamera 15 ausgebildet sind, umfassen Auswertemittel 16, die mit der wenigstens einen Kamera 15 in Wirkverbindung stehen.

Die Auswertemittel 16 sind so ausgebildet, dass für sämtliche Rotationskörper 100a-c ein Abbild der jeweiligen Mantelfläche aus mehreren Bildaufnahmen, die zeitlich versetzt aufgenommen wurden, erzeugt werden kann.

Das Abbild, das insbesondere durch eine Bild-Datei realisiert ist, ist aus mehreren Teilausschnitten, die jeweils aus einer Bildaufnahme entnommen werden, zusammengesetzt. Die Erfassungsmittel 4 sind hierfür so eingerichtet, dass aus jeder Bildaufnahme ein Teilausschnitt entnommen wird, wobei der Teilausschnitt in einer Hocherstreckung durch die Höhe der Rotationskörper und in einer Breitenerstreckung durch die Anzahl der Bildaufnahmen des jeweiligen Rotationskörpers 100a-c bestimmt ist.

Grundsätzlich ist es bevorzugt, wenn die Breitenerstreckung des Teilausschnitts möglichst klein gewählt wird, um aus der Bildaufnahme nur den Teil der Mantelfläche zu entnehmen, der zum Zeitpunkt der Bildaufnahme im Wesentlichen senkrecht zur Blickrichtung der Kamera ausgerichtet ist. Somit lässt sich der Einfluss der mantelseitigen Krümmung im jeweiligen Teilausschnitt und somit im erzeugbaren Abbild reduzieren.

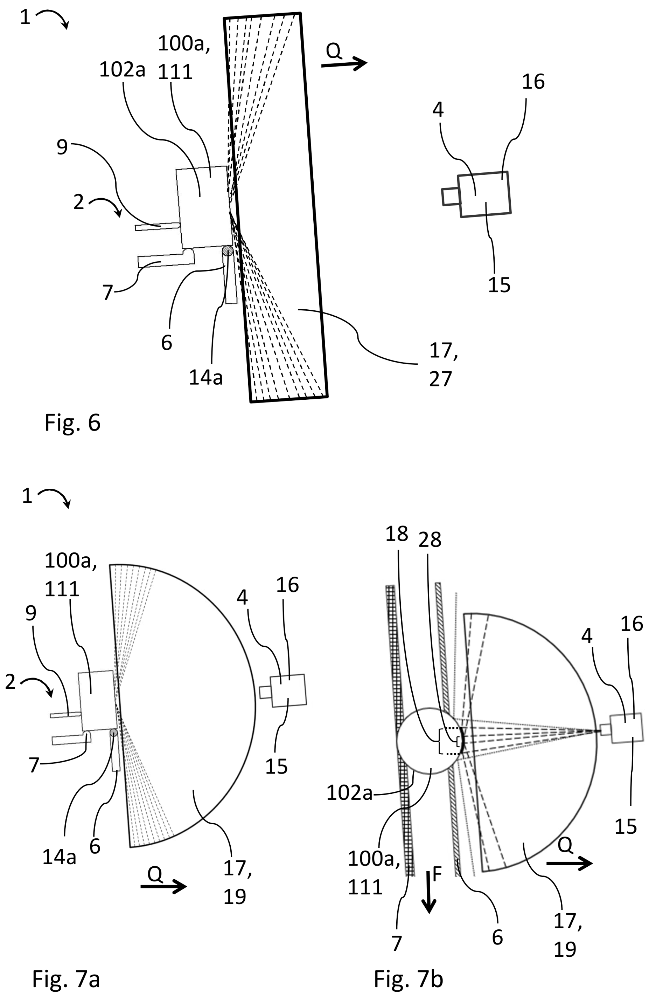

Die **Fig. 6** zeigt eine schematische Darstellung einer erfindungsgemäßen Prüfvorrichtung 1 gemäß einer fünften beispielhaften Ausführungsform in einer seitlichen Querschnitt-Ansicht.

Die gezeigte Prüfvorrichtung 1 umfasst Fördermittel 2, die bereits im Zusammenhang der Prüfvorrichtung 1 gemäß der dritten Ausführungsvariante im Detail erläutert wurden.

Um Wiederholungen zu vermeiden, werden im Folgenden nur die Eigenschaften und/oder Komponenten beschrieben, die nicht bereits im Zusammenhang mit den Ausführungsbeispielen der Figuren **3a bis 4c** erläutert wurden. Für Bezugsziffern, die im Folgenden nicht erläutert sind, gelten somit die Ausführungen von oben.

Die Prüfvorrichtung 1 gemäß der fünften Ausführungsvariante umfasst zusätzliche Auflicht-Beleuchtungsmittel 17. Die Auflicht-Beleuchtungsmittel 17 sind zum Ausleuchten der Rotationskörper 100a-c im Erfassungsbereich 5 von einer zu den Erfassungsmitteln 4 ausgerichteten Vorderansicht eingerichtet.

Im vorliegenden Ausführungsbeispiel sind die Auflicht-Beleuchtungsmittel 17 durch eine Ringleuchte 27 ausgebildet.

Die Ringleuchte 27 ist in Bezug auf die Querrichtung Q unmittelbar benachbart zu den Fördermitteln 2 und vorliegend in unmittelbarer Nähe zu der Antriebsschiene 6 positioniert.

Die erfindungsgemäße Prüfvorrichtung 1 bietet aufgrund der kompakten Bauform den Vorteil, dass die Ringleuchte 27 in Bezug auf die Querrichtung Q unmittelbar angrenzend zu den im Transportzustand 111 förderbaren Rotationskörpern 100a-c positioniert werden kann. Erfindungsgemäß vorteilhaft lassen sich somit Lichtstrahlen erzeugen, die unter einem sehr kleinen Winkel auf die Mantelfläche 102a-c der Rotationskörper 100a-c im Erfassungsbereich 5 auftreffen, was sich vorteilhaft auf das Bildsignal, das im Erfassungsbereich 5 von den Rotationskörpern 100a-c erzeugt wird, auswirkt.

Im Rahmen der vorliegenden erfindungsgemäßen Prüfvorrichtung 1 wird aufgrund der hinsichtlich der Querrichtung Q geringen Aufbauhöhe der Fördermittel 2 erzielt, dass Lichtstrahlen einer handelsüblichen Ringleuchte 27 auf die Mantelfläche 102a-c der Rotationskörper 100a-c auftreffen, die sich nahezu senkrecht zur Blickrichtung der Kamera 15 ausbreiten. Vorteilhaft lässt sich somit eine Dunkelfeld-Beleuchtung mit hoher Dunkelfeld-Qualität erzeugen.

Ferner ist es von Vorteil, dass aufgrund der in Querrichtung Q geringen Aufbauhöhe der Fördermittel 2 und der Ringleuchte 27 freier Bauraum entsteht, der einen hohen Freiheitsgrad beim Positionieren der Erfassungsmittel 4, also vorliegend der Kamera 15, erlaubt.

In den **Fig .7a****/b** ist eine erfindungsgemäße Prüfvorrichtung 1 gemäß einer sechsten Ausführungsvariante gezeigt. Bei dieser Ausführungsform entsprechen die Fördermittel 2 den der von der Prüfvorrichtung 1 gemäß der dritten Ausführungsvariante umfassten Fördermitteln 2. Um Wiederholungen zu vermeiden, werden im Folgenden nur neue Aspekte erläutert. Für Bezugsziffern, die im Folgenden nicht genannt sind, gelten die Ausführungen von oben.

Die erfindungsgemäße Prüfvorrichtung 1 gemäß der sechsten Ausführungsvariante ist in der **Fig. 7a** in einer Querschnitt-Ansicht dargestellt, wobei die Prüfvorrichtung 1 in dieser Ausführungsform Auflicht-Beleuchtungsmittel 17 umfasst, die durch Dom-Beleuchtungsmittel 19 ausgebildet sind.

Die Dom-Beleuchtungsmittel 19 ermöglichen neben einer Dunkelfeld-Beleuchtung auch eine Mischfeld-Beleuchtung und/oder eine Hellfeld-Beleuchtung der Rotationskörper 100a-c, die sich im Transportzustand 111 innerhalb des Erfassungsbereichs 5 befinden.

Gerade auch beim Einsatz der Dom-Beleuchtungsmittel 19 ist es von Vorteil, dass aufgrund der in Querrichtung Q geringen Breitenerstreckung der Fördermittel 2 freier Bauraum entsteht, der zum Positionieren der Dom-Beleuchtungsmittel 19 genutzt werden kann. Auf vorteilhafte Weise lassen sich somit die Dom-Beleuchtungsmittel 19 in Bezug auf die Querrichtung Q unmittelbar benachbart zu den entlang des Förderwegs 2 bewegbaren Rotationskörper 100a-c positionieren. Somit lässt sich auf der Mantelfläche ein beleuchteter Bereich 18 (vgl. hierzu die **Fig. 7b****)** erzeugen, der durch Lichtstrahlen erzeugt wird, die sich im Wesentlichen senkrecht zur Blickrichtung der Kamera 15 und/oder im Wesentlichen senkrecht zur Querrichtung Q ausbreiten, wodurch eine hohe Dunkelfeld-Qualität erzeugt werden kann.

Die **Fig. 7b** zeigt die Prüfvorrichtung 1 gemäß der sechsten Ausführungsvariante in einer Draufsicht. Aus der Darstellung geht hervor, dass die Blickrichtung der Kamera senkrecht zur Förderrichtung F verläuft.

Zudem ist in der Darstellung der Verlauf der Lichtstrahlen der Dunkelfeld-Beleuchtung, die mittels der Dom-Beleuchtungsmittel 19 erzeugt wird, grafisch dargestellt. Ferner ist die in Bezug auf die Förderrichtung F definierte Breitenerstreckung des auf der Mantelfläche 102a erzeugbaren beleuchteten Bereichs 18 grafisch dargestellt.

Im aktiven Prüfbetrieb der erfindungsgemäßen Prüfvorrichtung 1, wird von der Kamera 15 eine Abfolge von Bildaufnahmen erzeugt, wobei in jeder Bildaufnahme der beleuchtete Bereich 18 der Mantelfläche 102a abgebildet ist. Zwei aufeinanderfolgende Bildaufnahmen bilden somit zwei Teilausschnitte 28 der Mantelfläche 102a ab, die sich teilweise überlappen. Ferner wird durch eine Vielzahl aufeinanderfolgender Bildaufnahmen die gesamte Mantelfläche 102a eines jeweiligen Rotationskörpers 100a-c abgebildet.

Die von den Erfassungsmitteln 4 umfassten Auswertemittel 16 sind nun so eingerichtet, dass aus jeder dieser Vielzahl aufeinanderfolgender Bildaufnahmen ein Teilausschnitt 28 entnommen wird, um das Abbild der Mantelfläche 102a zu erzeugen. Der jeweilige Teilausschnitt 28 fällt hinsichtlich der in Längsrichtung definierten Breitenerstreckung kleiner aus als der beleuchtete Bereich 18.

Die Breite des Teilausschnitts 28 ist durch die Anzahl der aufeinanderfolgenden Bildaufnahmen, die eine vollständige Mantelfläche 102a abbilden, bestimmt. Grundsätzlich hat sich als vorteilhaft erwiesen, wenn zumindest 50 bis 100 Bildaufnahmen zum Abbilden der vollständigen Mantelfläche 102a erzeugt werden. Dies stellt einen guten Kompromiss zwischen der translatorischen und rotatorischen Geschwindigkeit der Rotationskörper 100a-c im Erfassungsbereich 5 und somit der prüfbaren Teileleistung und der Qualität der erzeugten Abbildungen dar.

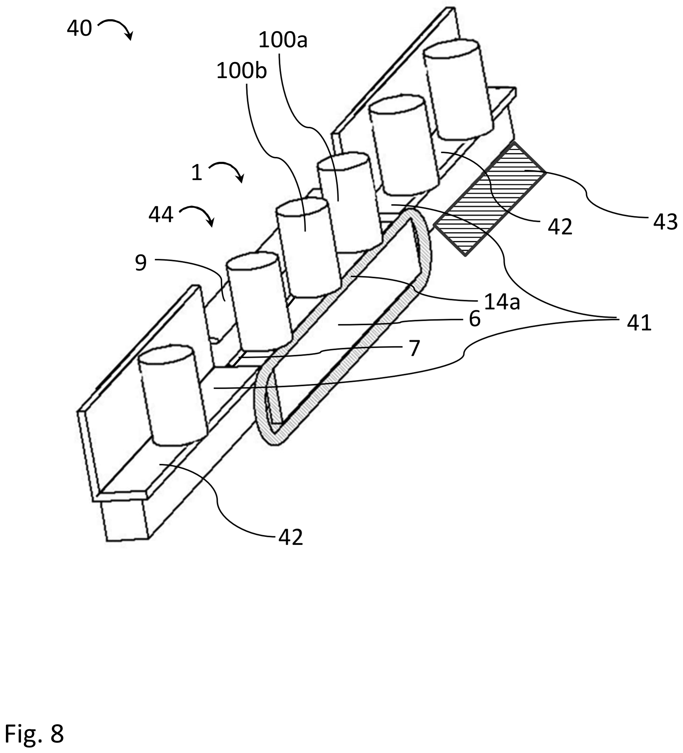

In der **Fig. 8** ist eine perspektivische Darstellung eines erfindungsgemäßen Prüfsystems 40 gezeigt. Das Prüfsystem 40 umfasst eine Linearschiene 41 sowie eine erfindungsgemäße Prüfvorrichtung 1.

Die Linearschiene 41 weist eine Gleitfläche 42 und nur schematisch dargestellte Vortriebsmittel 43 auf. Die Linearschiene 41 ist so ausgebildet, dass die Rotationskörper 100a-c auf der Gleitfläche 42 entlang einer Transportrichtung in Folge von mittels den Vortriebsmitteln 43 erzeugbaren Vibrationen translatorisch bewegbar sind.

Zur Aufnahme der erfindungsgemäßen Prüfvorrichtung 1 ist die Gleitfläche 42 bereichsweise unterbrochen, um eine Aussparung 44 innerhalb der Gleitfläche 42 auszubilden. Die Aussparung 44 ist so dimensioniert, dass sich die erfindungsgemäßen Fördermittel 2 der erfindungsgemäßen Prüfvorrichtung 1 längs der Aussparung 44 erstrecken.

Konkret erstrecken sich die erfindungsgemäße Antriebsschiene 6, die erfindungsgemäße Bremsschiene 7 und die erfindungsgemäße seitliche Führungsschiene 9, die gemeinsam die Fördermittel 2 ausbilden, zwischen einem Einlauf und einem Auslauf, die jeweils von der Linearschiene 41 ausgebildet sind. Der Einlauf der Linearschiene 41 ist mit der erfindungsgemäßen Prüfvorrichtung 1 eingangsseitig und der Auslauf der Linearschiene 41 ist mit der erfindungsgemäßen Prüfvorrichtung 1 ausgangsseitig verbunden.

In vorteilhafter Weise wird es somit ermöglicht, dass die erfindungsgemäße Prüfvorrichtung 1 auf der gleichen Ebene wie die Gleitfläche 42 ausgebildet ist. Hierdurch wird ermöglicht, dass die erfindungsgemäße Prüfvorrichtung 1 in bestehende Linearschienen insbesondere nachträglich integriert werden kann, um ein erfindungsgemäßes Prüfsystem 40 auszubilden.

In vorteilhafter Weise lassen sich somit sämtliche Rotationskörper einer bestehenden Fertigungsanlage durch eine nachträgliche Integration einer voll automatisierten Qualitätsprüfung unterziehen.

Im Ergebnis ermöglicht die erfindungsgemäße Prüfvorrichtung das mantelseitige Erfassen einer Vielzahl an Rotationskörpern, wobei die Rotationskörper nicht einzeln im Erfassungsbereich platziert werden müssen, wodurch ein einfaches Teilehandling im losen Teilestau erzielbar ist. Ferner erzielt die erfindungsgemäße Prüfvorrichtung eine hohe Teilevielfalt, da Rotationskörper mit unterschiedlichster geometrischer Ausgestaltung unmittelbar oder nach einer Anpassung mittels der vertikalen und/oder horizontalen Einstellmittel mantelseitig erfasst werden können, was zu einer hohen Universalität im Teilespektrum führt. Zudem bietet die erfindungsgemäße Prüfvorrichtung im Erfassungsbereich eine uneingeschränkt freie Sicht auf die Mantelfläche, um diese vollständig mittels der Erfassungsmittel zu erfassen. Weiterhin bietet die erfindungsgemäße Prüfvorrichtung einen besonders großzügigen Bauraum zur Aufnahme von Beleuchtungsmitteln, insbesondere für Dunkellicht-Beleuchtungsmittel in unmittelbarer Nähe zu den Rotationskörpern. Schließlich erzielt die erfindungsgemäße Prüfvorrichtung zudem eine außergewöhnlich hohe Teileleistung bei der mantelseitigen Prüfung der Rotationskörper. Ferner ist die erfindungsgemäße Prüfvorrichtung universal einsetzbar, da insbesondere auch eine einfache Integration in bestehende Fördereinheiten, insbesondere Linearschienen, besteht.

## Patentansprüche

1. Prüfvorrichtung (1) zur mantelseitigen Inspektion von Rotationskörpern (100a-c), wobei der jeweilige Rotationskörper (100a-c) eine Rotationsachse (Rot) umfasst, die senkrecht zu einer Tragfläche (101a-c) und konzentrisch zu einer Mantelfläche (102a-c) des jeweiligen Rotationskörpers (100a-c) verläuft, aufweisend
- Fördermittel (2), die so ausgebildet sind, dass die Rotationskörper (100a-c) in einem Transportzustand (111) entlang eines Förderwegs (3) nacheinander bewegbar sind und
- Erfassungsmittel (4), die so ausgebildet sind, dass die Mantelfläche (102a-c) des jeweiligen Rotationskörpers (100a-c) in einem Erfassungsbereich (5) durch wenigstens ein Bildsignal erfassbar ist,
**dadurch gekennzeichnet,**
**dass** die Fördermittel (2) eine Antriebsschiene (6) und eine Bremsschiene (7) umfassen, die gemeinsam einen Auflagebereich (8) für die Rotationskörper (100a-c) ausbilden und entlang des Förderwegs (3) gleisartig und/oder parallel so ausgerichtet sind, dass die Rotationskörper (100a-c) im Transportzustand (111) durch Reibung einerseits zwischen der Antriebsschiene (6) und einem ersten Teilbereich (103) der jeweiligen Tragfläche (101a-c) mit einer Antriebskraft (Fa) und andererseits zwischen der Bremsschiene (7) und einem zweiten Teilbereich (104) der jeweiligen Tragfläche (101a-c) mit einer Bremskraft (Fb) sowohl translatorisch entlang des Förderwegs (3) als auch rotatorisch um die jeweilige Rotationsachse (Rot) bewegbar sind, wobei sich der Erfassungsbereich (5) entlang eines Abschnitts des Förderwegs (3) erstreckt.

2. Prüfvorrichtung nach Anspruch 1,
**dadurch gekennzeichnet,**
**dass** die Antriebsschiene (6) zur Bremsschiene (7) so verschwenkt ist, dass der Auflagebereich (8) um einen Neigungswinkel (α) zur Horizontalen (H) geneigt verläuft, derart, dass die auf die jeweiligen Rotationskörper (100a-c) wirkende Hangabtriebskraft (Fha) größer ist als die aus der Antriebskraft (Fa) der Antriebsschiene (6) resultierende Seitwärtskraft (Fseit), wobei der Neigungswinkel (α) insbesondere zwischen 1° bis 80°, bevorzugt 2° bis 40° besonders bevorzugt 7° bis 14° gewählt ist.

3. Prüfvorrichtung nach Anspruch 2,
**dadurch gekennzeichnet,**
**dass** die Fördermittel (2) eine seitliche Führungsschiene (9) umfassen, die entlang des Förderwegs (3) zur Bremsschiene (7) parallel ausgerichtet ist und mit der jeweiligen Mantelfläche (102a-c) der Rotationskörper (100a-c) im Transportzustand (111) aufgrund der Hangabtriebskraft (Fha) in Kontakt tritt.

4. Prüfvorrichtung nach Anspruch 3,
dass die seitliche Führungsschiene (9) und die Bremsschiene (7) als ein monolithisches und/oder einstückiges Bauteil mit einem L-förmigem Querschnitt (10) ausgebildet sind.

5. Prüfvorrichtung nach Anspruch 3,
**dadurch gekennzeichnet,**
**dass** die Fördermittel (2) vertikale Einstellmittel (11) umfassen, die so ausgebildet sind, dass der lotrechte Abstand zwischen einem vom Auflagebereich (8) definierten Bezugsebne und der seitlichen Führungsschiene (9) veränderbar ist, um Rotationskörper (100a-c) mit unterschiedlichen Höhen im Transportzustand (111) mantelseitig zu stützen.

6. Prüfvorrichtung nach einem der vorgenannten Ansprüche,
**dadurch gekennzeichnet,**
**dass** die Antriebsschiene (6) und die Bremsschiene (7) so voneinander beabstandet sind, dass die jeweilige Rotationsachse (Rot) der Rotationskörper (100a-c) im Transportzustand (111) zwischen der Antriebsschiene (6) und der Bremsschiene (7) verläuft und/oder
**dass** die Fördermittel (2) horizontale Einstellmittel (12) umfassen, die so ausgebildet sind, dass der Abstand zwischen der Antriebsschiene (6) und der Bremsschiene (7) einstellbar ist, um Rotationskörper (100a-c) mit unterschiedlichen Durchmessern zu fördern.

7. Prüfvorrichtung nach einem der vorgenannten Ansprüche,
**dadurch gekennzeichnet,**
**dass** die Antriebsschiene (6) ein Bandantrieb (13) mit einem entlang des Förderwegs (3) bewegbaren Band (14) umfasst, um die Antriebskraft (Fa) in den ersten Teilbereich (103) der jeweiligen Tragfläche (101a-c) einzubringen, wobei das Band (14) mit der jeweiligen Tragfläche (101a-c) der Rotationskörper (100a-c) in Kontakt tritt, wobei das Band (14) insbesondere als ein Rundriemen (14a) ausgebildet ist, um einen linienförmigen ersten Teilbereich (103) auszubilden.

8. Prüfvorrichtung nach einem der vorgenannten Ansprüche,
**dadurch gekennzeichnet,**
**dass** die Erfassungsmittel (4) durch wenigstens eine Kamera (15), insbesondere eine Matrixkamera, ausgebildet sind, die in Draufsicht seitlich zu den Fördermitteln (2) und benachbart zur Antriebsschiene (6) und/oder Bremsschiene (7) angeordnet ist, wobei die wenigstens eine Kamera (15) auf den Erfassungsbereich (5) ausgerichtet ist, derart, dass die jeweilige Mantelfläche (102a-c) der Rotationskörper (100a-c) im Erfassungsbereich (5) durch mehrere Bildaufnahmen bezüglich einer jeweiligen Höhenerstreckung zumindest teilweise und bezüglich einer jeweiligen umfangsseitigen Erstreckung vollständig erfassbar ist.

9. Prüfvorrichtung nach Anspruch 8,
**dadurch gekennzeichnet,**
**dass** die Erfassungsmittel (4) Auswertemittel (16) umfassen, die mit der wenigstens einen Kamera (15) in Wirkverbindung stehen, wobei die Auswertemittel (16) so ausgebildet sind, dass für sämtliche Rotationskörper (100a-c) aus den mehreren Bildaufnahmen ein Abbild der jeweiligen Mantelfläche erzeugbar ist,
wobei die Erfassungsmittel (4) insbesondere so ausgebildet sind, dass aus jeder Bildaufnahme jeweils ein Teilausschnitt (28) entnehmbar und im Abbild zum Nachbilden der Mantelfläche zusammensetzbar ist.

10. Prüfvorrichtung nach einem der vorgenannten Ansprüche,
**dadurch gekennzeichnet,**
**dass** die Prüfvorrichtung (1) Auflicht-Beleuchtungsmittel (17) umfasst, wobei die Auflicht-Beleuchtungsmittel (17) so ausgebildet sind, dass die durch den Erfassungsbereich (5) bewegbaren Rotationskörper (100a-c) von einer Vorderansicht, die zu den Erfassungsmitteln (4) ausgerichtet ist, beleuchtbar sind, wobei die Auflicht-Beleuchtungsmittel (17) bevorzugt durch Dunkelfeld-Beleuchtungsmittel, besonders bevorzugt durch Dom-Beleuchtungsmittel (19), ausgebildet sind, die unmittelbar benachbart zur Antriebsschiene (6) positioniert sind, um Lichtstrahlen zu erzeugen, die im Wesentlichen senkrecht zu einer Blickrichtung der Erfassungsmittel (4) ausgerichtet sind.

11. Prüfvorrichtung nach einem der vorgenannten Ansprüche,
**dadurch gekennzeichnet,**
**dass** die Prüfvorrichtung (1) Durchlicht-Beleuchtungsmittel (20) umfasst, wobei die Durchlicht-Beleuchtungsmittel (20) so ausgebildet sind, dass der Erfassungsbereich (5) vollständig mit fokussiertem Licht ausleuchtbar ist, um die Rotationskörper (100a-c) im Erfassungsbereich (5) von einer Hinteransicht, die von den Erfassungsmitteln (4) abgewandt ist, zu beleuchten.

12. Prüfvorrichtung nach Anspruch 11,
**dadurch gekennzeichnet,**
**dass** die Durchlicht-Beleuchtungsmittel (20) eine Sammellinse (21), insbesondere eine Fresnell-Linse (21a), und eine punktförmige Lichtquelle (22) umfassen, um fokussiertes endozentrisches Licht zum Ausleuchten des Erfassungsbereich (5) zu erzeugen.

13. Prüfsystem (40) umfassend eine Linearschiene (41) sowie eine Prüfvorrichtung (1), die nach einem der oben genannten Ansprüche ausgebildet ist,
wobei die Linearschiene (41) eine Gleitfläche (42) sowie Vortriebsmittel (43) umfasst, derart, dass die Rotationskörper (100a-c) auf der Gleitfläche (42) entlang einer Transportrichtung in Folge von mittels den Vortriebsmitteln (43) erzeugbaren Vibrationen translatorisch bewegbar sind,
**dadurch gekennzeichnet,**
**dass** die Gleitfläche (42) in einem Zwischenbereich eine Aussparung (44) zur Aufnahme der erfindungsgemäßen Prüfvorrichtung (1) umfasst, um die mittels der Linearschiene (41) förderbaren Rotationskörper (100a-c) mantelseitig zu inspizieren.

## Geänderte Patentansprüche

### Geänderte Patentansprüche gemäss Regel 137(2) EPÜ.

1. Prüfvorrichtung (1) zur mantelseitigen Inspektion von Rotationskörpern (100a-c), wobei der jeweilige Rotationskörper (100a-c) eine Rotationsachse (Rot) umfasst, die senkrecht zu einer Tragfläche (101a-c) und konzentrisch zu einer Mantelfläche (102a-c) des jeweiligen Rotationskörpers (100a-c) verläuft, aufweisend
- Fördermittel (2), die so ausgebildet sind, dass die Rotationskörper (100a-c) in einem Transportzustand (111) entlang eines Förderwegs (3) nacheinander bewegbar sind und
- Erfassungsmittel (4), die so ausgebildet sind, dass die Mantelfläche (102a-c) des jeweiligen Rotationskörpers (100a-c) in einem Erfassungsbereich (5) durch wenigstens ein Bildsignal erfassbar ist,
wobei die Fördermittel (2) eine Antriebsschiene (6) und eine Bremsschiene (7) umfassen, die gemeinsam einen Auflagebereich (8) für die Rotationskörper (100a-c) ausbilden und entlang des Förderwegs (3) gleisartig und/oder parallel so ausgerichtet sind, dass die Rotationskörper (100a-c) im Transportzustand (111) durch Reibung einerseits zwischen der Antriebsschiene (6) und einem ersten Teilbereich (103) der jeweiligen Tragfläche (101a-c) mit einer Antriebskraft (Fa) und andererseits zwischen der Bremsschiene (7) und einem zweiten Teilbereich (104) der jeweiligen Tragfläche (101a-c) mit einer Bremskraft (Fb) sowohl translatorisch entlang des Förderwegs (3) als auch rotatorisch um die jeweilige Rotationsachse (Rot) bewegbar sind, wobei sich der Erfassungsbereich (5) entlang eines Abschnitts des Förderwegs (3) erstreckt,
wobei die Antriebsschiene (6) einen Bandantrieb (13) mit einem entlang des Förderwegs (3) bewegbaren Band (14) umfasst, um die Antriebskraft (Fa) in den ersten Teilbereich (103) der jeweiligen Tragfläche (101a-c) einzubringen, wobei das Band (14) mit der jeweiligen Tragfläche (101a-c) der Rotationskörper (100a-c) in Kontakt tritt,
**dadurch gekennzeichnet,**
**dass** die Bremsschiene starr ausgebildet ist und im Transportzustand mit der jeweiligen Tragfläche der Rotationskörper im zweiten Teilbereich in Kontakt steht.

2. Prüfvorrichtung nach Anspruch 1,
**dadurch gekennzeichnet,**
**dass** die Antriebsschiene (6) zur Bremsschiene (7) so verschwenkt ist, dass der Auflagebereich (8) um einen Neigungswinkel (α) zur Horizontalen (H) geneigt verläuft, derart, dass die auf die jeweiligen Rotationskörper (100a-c) wirkende Hangabtriebskraft (Fha) größer ist als die aus der Antriebskraft (Fa) der Antriebsschiene (6) resultierende Seitwärtskraft (Fseit), wobei der Neigungswinkel (α) insbesondere zwischen 1° bis 80°, bevorzugt 2° bis 40° besonders bevorzugt 7° bis 14° gewählt ist.

3. Prüfvorrichtung nach Anspruch 2,
**dadurch gekennzeichnet,**
**dass** die Fördermittel (2) eine seitliche Führungsschiene (9) umfassen, die entlang des Förderwegs (3) zur Bremsschiene (7) parallel ausgerichtet ist und mit der jeweiligen Mantelfläche (102a-c) der Rotationskörper (100a-c) im Transportzustand (111) aufgrund der Hangabtriebskraft (Fha) in Kontakt tritt.

4. Prüfvorrichtung nach Anspruch 3,
dass die seitliche Führungsschiene (9) und die Bremsschiene (7) als ein monolithisches und/oder einstückiges Bauteil mit einem L-förmigem Querschnitt (10) ausgebildet sind.

5. Prüfvorrichtung nach Anspruch 3,
**dadurch gekennzeichnet,**
**dass** die Fördermittel (2) vertikale Einstellmittel (11) umfassen, die so ausgebildet sind, dass der lotrechte Abstand zwischen einem vom Auflagebereich (8) definierten Bezugsebne und der seitlichen Führungsschiene (9) veränderbar ist, um Rotationskörper (100a-c) mit unterschiedlichen Höhen im Transportzustand (111) mantelseitig zu stützen.

6. Prüfvorrichtung nach einem der vorgenannten Ansprüche,
**dadurch gekennzeichnet,**
**dass** die Antriebsschiene (6) und die Bremsschiene (7) so voneinander beabstandet sind, dass die jeweilige Rotationsachse (Rot) der Rotationskörper (100a-c) im Transportzustand (111) zwischen der Antriebsschiene (6) und der Bremsschiene (7) verläuft und/oder
**dass** die Fördermittel (2) horizontale Einstellmittel (12) umfassen, die so ausgebildet sind, dass der Abstand zwischen der Antriebsschiene (6) und der Bremsschiene (7) einstellbar ist, um Rotationskörper (100a-c) mit unterschiedlichen Durchmessern zu fördern.

7. Prüfvorrichtung nach einem der vorgenannten Ansprüche,
**dadurch gekennzeichnet,**
**dass** das Band (14) als ein Rundriemen (14a) ausgebildet ist, um einen linienförmigen ersten Teilbereich (103) auszubilden.

8. Prüfvorrichtung nach einem der vorgenannten Ansprüche,
**dadurch gekennzeichnet,**
**dass** die Erfassungsmittel (4) durch wenigstens eine Kamera (15), insbesondere eine Matrixkamera, ausgebildet sind, die in Draufsicht seitlich zu den Fördermitteln (2) und benachbart zur Antriebsschiene (6) und/oder Bremsschiene (7) angeordnet ist, wobei die wenigstens eine Kamera (15) auf den Erfassungsbereich (5) ausgerichtet ist, derart, dass die jeweilige Mantelfläche (102a-c) der Rotationskörper (100a-c) im Erfassungsbereich (5) durch mehrere Bildaufnahmen bezüglich einer jeweiligen Höhenerstreckung zumindest teilweise und bezüglich einer jeweiligen umfangsseitigen Erstreckung vollständig erfassbar ist.

9. Prüfvorrichtung nach Anspruch 8,
**dadurch gekennzeichnet,**
**dass** die Erfassungsmittel (4) Auswertemittel (16) umfassen, die mit der wenigstens einen Kamera (15) in Wirkverbindung stehen, wobei die Auswertemittel (16) so ausgebildet sind, dass für sämtliche Rotationskörper (100a-c) aus den mehreren Bildaufnahmen ein Abbild der jeweiligen Mantelfläche erzeugbar ist,
wobei die Erfassungsmittel (4) insbesondere so ausgebildet sind, dass aus jeder Bildaufnahme jeweils ein Teilausschnitt (28) entnehmbar und im Abbild zum Nachbilden der Mantelfläche zusammensetzbar ist.

10. Prüfvorrichtung nach einem der vorgenannten Ansprüche,
**dadurch gekennzeichnet,**
**dass** die Prüfvorrichtung (1) Auflicht-Beleuchtungsmittel (17) umfasst, wobei die Auflicht-Beleuchtungsmittel (17) so ausgebildet sind, dass die durch den Erfassungsbereich (5) bewegbaren Rotationskörper (100a-c) von einer Vorderansicht, die zu den Erfassungsmitteln (4) ausgerichtet ist, beleuchtbar sind, wobei die Auflicht-Beleuchtungsmittel (17) bevorzugt durch Dunkelfeld-Beleuchtungsmittel, besonders bevorzugt durch Dom-Beleuchtungsmittel (19), ausgebildet sind, die unmittelbar benachbart zur Antriebsschiene (6) positioniert sind, um Lichtstrahlen zu erzeugen, die im Wesentlichen senkrecht zu einer Blickrichtung der Erfassungsmittel (4) ausgerichtet sind.

11. Prüfvorrichtung nach einem der vorgenannten Ansprüche,
**dadurch gekennzeichnet,**
**dass** die Prüfvorrichtung (1) Durchlicht-Beleuchtungsmittel (20) umfasst, wobei die Durchlicht-Beleuchtungsmittel (20) so ausgebildet sind, dass der Erfassungsbereich (5) vollständig mit fokussiertem Licht ausleuchtbar ist, um die Rotationskörper (100a-c) im Erfassungsbereich (5) von einer Hinteransicht, die von den Erfassungsmitteln (4) abgewandt ist, zu beleuchten.

12. Prüfvorrichtung nach Anspruch 11,
**dadurch gekennzeichnet,**
**dass** die Durchlicht-Beleuchtungsmittel (20) eine Sammellinse (21), insbesondere eine Fresnell-Linse (21a), und eine punktförmige Lichtquelle (22) umfassen, um fokussiertes endozentrisches Licht zum Ausleuchten des Erfassungsbereich (5) zu erzeugen.

13. Prüfsystem (40) umfassend eine Linearschiene (41) sowie eine Prüfvorrichtung (1), die nach einem der oben genannten Ansprüche ausgebildet ist,
wobei die Linearschiene (41) eine Gleitfläche (42) sowie Vortriebsmittel (43) umfasst, derart, dass die Rotationskörper (100a-c) auf der Gleitfläche (42) entlang einer Transportrichtung in Folge von mittels den Vortriebsmitteln (43) erzeugbaren Vibrationen translatorisch bewegbar sind,
**dadurch gekennzeichnet,**
**dass** die Gleitfläche (42) in einem Zwischenbereich eine Aussparung (44) zur Aufnahme der erfindungsgemäßen Prüfvorrichtung (1) umfasst, um die mittels der Linearschiene (41) förderbaren Rotationskörper (100a-c) mantelseitig zu inspizieren.
